(19) 

Europäisches
Patentamt
European
Patent Office
Office européen
des brevets

(11) **EP 4 096 116 A1**

(12) **EUROPEAN PATENT APPLICATION**
published in accordance with Art. 153(4) EPC

(43) Date of publication:
**30.11.2022 Bulletin 2022/48**

(21) Application number: **21753546.7**

(22) Date of filing: **05.02.2021**

(51) International Patent Classification (IPC):
**H04B 7/185** *(2006.01)*

(52) Cooperative Patent Classification (CPC):
**H04B 7/185; H04L 27/00; H04W 56/00;** Y02D 30/70

(86) International application number:
**PCT/CN2021/075374**

(87) International publication number:
**WO 2021/160025 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.02.2020  CN 202010093138**

(71) Applicant: **Huawei Technologies Co., Ltd.
Longgang District
Shenzhen, Guangdong 518129 (CN)**

(72) Inventors:
• **CHEN, Ying
Shenzhen, Guangdong 518129 (CN)**

• **LUO, Hejia
Shenzhen, Guangdong 518129 (CN)**
• **WANG, Xiaolu
Shenzhen, Guangdong 518129 (CN)**
• **QIAO, Yunfei
Shenzhen, Guangdong 518129 (CN)**
• **LI, Rong
Shenzhen, Guangdong 518129 (CN)**
• **DU, Yinggang
Shenzhen, Guangdong 518129 (CN)**

(74) Representative: **Maiwald GmbH
Elisenhof
Elisenstraße 3
80335 München (DE)**

(54) **SATELLITE COMMUNICATION METHOD AND APPARATUS**

(57)    This application provides a satellite communication method and apparatus. The method includes: A terminal device receives first indication information. The first indication information indicates a validity duration of first parameter information. The first parameter information includes at least one of the following information: a first timing advance, parameter information of the first timing advance, a first frequency offset pre-compensation, or parameter information of the first frequency offset pre-compensation. The terminal device performs uplink communication with a satellite in the validity duration based on the first parameter information. The terminal device can obtain, by receiving the first indication information, a validity duration of parameter information such as the first timing advance, the parameter information of the first timing advance, the first frequency offset pre-compensation, or the parameter information of the first frequency offset pre-compensation. In this way, there is no need to listen to whether the parameter information is updated in the validity duration. This can improve communication performance while reducing energy consumption of the terminal device and communication complexity.

FIG. 7

**Description**

This application claims priority to Chinese Patent Application No. 202010093138.6, filed with the China National Intellectual Property Administration on February 14, 2020 and entitled "SATELLITE COMMUNICATION METHOD AND APPARATUS", which is incorporated herein by reference in its entirety.

**TECHNICAL FIELD**

This application relates to the communication field, and more specifically, to a satellite communication method and apparatus.

**BACKGROUND**

Compared with ground communication, satellite communication has unique advantages. For example, satellite communication can provide a wider coverage area, and satellite base stations are not vulnerable to natural disasters or external forces. If the satellite communication is introduced into a fifth generation (5th generation, 5G) system and a future evolved network, communication services can be provided for areas that cannot be covered by a ground communication network such as oceans and forests. Reliability of 5G communication can be enhanced, for example, better communication services are ensured for air planes, trains, and users on these transportation means. More data transmission resources are provided for the 5G communication, and a network rate is improved. Therefore, supporting communication with both the ground and satellite networks is an inevitable trend of the future 5G communication, and has great benefits in terms of wide coverage, reliability, multi-connection, a high throughput, and the like. Currently, the satellite communication and ground communication greatly differ in terms of a communication protocol. Common terminal devices such as a mobile phone can support only baseline communication with a ground base station, and only a dedicated satellite mobile phone can communicate with a satellite. In the 5G communication, a satellite communication process needs to be redesigned, so that the satellite communication can be integrated with the existing ground communication without greatly increasing costs or complexity of a terminal device. During communication, a terminal only needs to select a suitable base station based on a corresponding requirement for communication.

A significant challenge for integrating the satellite communication and ground communication is an excessive round trip delay (round trip delay, RTD) in a satellite system. For example, an RTD of a geostationary orbit (geostationary orbit, GEO) satellite may reach hundreds of milliseconds. However, an RTD in the 5G system does not exceed 1 millisecond. In addition, a satellite moves at a very fast speed. A low earth orbit satellite with an orbit height of 600 km can move at a speed of 7.56 km/s, and an RTD rapidly changes with time. This is a great challenge for uplink time synchronization. In addition to the time, the satellite movement further introduces a large Doppler frequency shift, and related impact needs to be considered in an uplink and downlink frequency synchronization process.

According to a currently known technology, a satellite may broadcast a common timing advance (timing advance, TA) and a common TA drift rate. Therefore, a terminal device may automatically perform TA tracking based on the common TA and the common TA drift rate. This can reduce a TA adjustment error and closed-loop pressure.

In addition, the satellite may broadcast a common frequency compensation. In this way, the terminal device can adjust a sending frequency based on the common frequency compensation, to reduce impact of the Doppler frequency shift on communication.

However, in the conventional technology, for example, for a cell at an under-satellite point, parameters such as the common TA, the TA drift rate, and the common frequency compensation broadcast by the satellite may be frequently updated. Consequently, the terminal device needs to listen to a parameter update status in real time. Energy consumption required for monitoring is high and the system is complex.

**SUMMARY**

This application provides a satellite communication method and apparatus, to improve communication performance while reducing energy consumption of a terminal device and communication complexity.

According to a first aspect, a satellite communication method is provided, and includes: A terminal device receives first indication information. The first indication information indicates a validity duration of first parameter information, and the first parameter information includes at least one type of the following information: a first timing advance, parameter information of the first timing advance, a first frequency offset pre-compensation, or parameter information of the first frequency offset pre-compensation. The terminal device performs uplink communication with a satellite in the validity duration based on the first parameter information.

According to the solution provided in this application, the terminal device can learn, by receiving the first indication information, validity durations of parameter information such as the first timing advance, the parameter information of the first timing advance, the first frequency offset pre-compensation, or the parameter information of the first frequency offset pre-compensation. In this way, there is no need to listen to whether the parameter information is updated in the validity duration. This can improve communication performance while reducing energy consumption of the terminal device and communication complexity. In particular, when a parameter is not frequently updated, if the terminal device still listens in real time, energy consumption of the terminal device and communication complexity are greatly increased. The method provided in this application can effectively address the foregoing scenario, and greatly reduce the energy consumption of the terminal device and the communication complexity.

Optionally, the first timing advance includes a common timing advance. The common timing advance may be understood as a same timing advance used by all terminal devices that communicate with the satellite, or a timing advance used in a cell provided by the satellite. Descriptions of a same or similar situation are omitted below to avoid repetition.

Optionally, the parameter information of the first timing advance includes a parameter used to determine a drift status of the first timing advance, for example, a first timing advance drift rate or an ephemeris parameter of the satellite. The ephemeris parameter of the satellite may include, for example, a moving speed or angle of the satellite. Descriptions of a same or similar situation are omitted below to avoid repetition.

The first timing advance drift rate may be understood as a drift amount of the first timing advance in a time unit (for example, a first time unit).

Optionally, a value of the first time unit is variable.

Optionally, the first frequency offset pre-compensation includes a common frequency offset pre-compensation. The common frequency offset pre-compensation may be understood as a common frequency offset pre-compensation used by all terminal devices that communicate with the satellite, or a common frequency offset pre-compensation used in a cell provided by the satellite. Descriptions of a same or similar situation are omitted below to avoid repetition.

In this application, a frequency offset compensation may also be referred to as a frequency offset compensation amount, a frequency offset pre-compensation, a frequency offset pre-compensation amount, a frequency pre-compensation, a frequency compensation amount, or the like.

Optionally, the parameter information of the first frequency offset pre-compensation includes a parameter used to determine a drift status of the first frequency offset pre-compensation, for example, a first frequency offset pre-compensation drift rate or the ephemeris parameter of the satellite. The ephemeris parameter of the satellite may include, for example, the moving speed or angle of the satellite. Descriptions of a same or similar situation are omitted below to avoid repetition.

The first frequency offset pre-compensation drift rate may be understood as a drift amount of the first frequency offset pre-compensation in a time unit (for example, a second time unit).

Optionally, a value of the second time unit is variable.

In embodiments of this application, the values of the first time unit and the second time unit may be the same or different. This is not specifically limited in this application.

In this application, the first indication information indicates the validity duration of the first parameter information. For example, the first indication information may include an index, an identifier, or the like corresponding to the validity duration (for example, a value, range, or location of the validity duration). Alternatively, the first indication information may include bits corresponding to a specific value of the validity duration (for example, the value of the validity duration). Descriptions of a same or similar situation are omitted below to avoid repetition.

Alternatively, in this application, the first indication information indicates the validity duration of the first parameter information. For example, a correspondence between a plurality of parameter groups and a plurality of durations may be prestored in the terminal device, and the first indication information may indicate a parameter group (for example, a first parameter group). In this case, the terminal device may determine a duration corresponding to the first parameter group as the validity duration of the first parameter information. Descriptions of a same or similar situation are omitted below to avoid repetition.

In other words, the method further includes:

determining the validity duration of the first parameter information based on the first indication information and mapping relationship information. The mapping relationship information indicates the correspondence between the plurality of parameter groups and the plurality of durations, the first indication information indicates the first parameter group, and the validity duration is a duration corresponding to the first parameter group. Each parameter group includes at least one of the following parameters:

a timing advance, a timing advance index, a timing advance calculation parameter, a timing advance drift rate, a timing advance drift rate index, a timing advance drift rate calculation parameter, a frequency offset pre-compensation, a frequency offset pre-compensation index, a frequency offset pre-compensation calculation parameter, a frequency offset pre-compensation drift rate, a frequency offset pre-compensation drift rate index, and a frequency offset pre-compensation drift rate calculation parameter.

Therefore, signaling overheads can be reduced by delivering the validity duration that indicates the first parameter information and that is of a parameter group used for communication.

Optionally, the first indication information further includes the first parameter information.

Optionally, the first indication information is carried in a common timing advance indication field in a system message.

For example, the system message may be a system message of a terrestrial communication system.

The terrestrial communication system may also be referred to as a ground communication system, for example, a cellular network system. Descriptions of a same or similar situation are omitted below to avoid repetition.

It should be understood that the foregoing field (or field) used to carry the first indication information is merely an example for description, and this application is not limited thereto. For example, the first indication information may be carried in any cell-level field in the system message. Descriptions of a same or similar situation are omitted below to avoid repetition.

Optionally, a common timing advance parameter carried in the common timing advance indication field is determined based on the first timing advance.

For example, the common timing advance parameter carried in the common timing advance indication field may include a first common timing advance parameter and a second common timing advance parameter. The first common timing advance parameter may indicate a common timing advance in a terrestrial communication system. The second common timing advance parameter may indicate a common timing advance used for satellite communication, that is, the second common timing advance parameter may indicate the first timing advance. Descriptions of a same or similar situation are omitted below to avoid repetition.

A location relationship between the first common timing advance parameter and the second common timing advance parameter in the common timing advance indication field may be randomly configured. This is not particularly limited in this application.

For another example, the common timing advance parameter carried in the common timing advance indication field indicates a sum of the first common timing advance and the second common timing advance.

Optionally, the parameter information of the first timing advance includes a first drift rate, the first drift rate is a drift amount of the first timing advance in the first time unit, and a value of the first time unit is variable.

Alternatively, the parameter information of the first frequency offset pre-compensation includes a second drift rate, the second drift rate is a drift amount of the first frequency offset pre-compensation in the second time unit, and a value of the second time unit is variable.

Optionally, the method further includes: The terminal device receives second indication information. The second indication information includes information about the value of the first time unit or information about the value of the second time unit.

Optionally, the second indication information is carried in the common timing advance indication field in the system message.

It should be understood that the foregoing field used to carry the second indication information is merely an example for description, and this application is not limited thereto. For example, the second indication information may be carried in any cell-level field in the system message. Descriptions of a same or similar situation are omitted below to avoid repetition.

According to a second aspect, a satellite communication method is provided, and includes:

A satellite sends first indication information. The first indication information indicates a validity duration of first parameter information. The first parameter information includes at least one type of the following information:

a first timing advance, parameter information of the first timing advance, a first frequency offset pre-compensation, or parameter information of the first frequency offset pre-compensation.

The satellite performs uplink communication with a terminal device in the validity duration based on the first parameter information.

Optionally, the first indication information indicates a first parameter group in a plurality of parameter groups, and the validity duration is a duration indicated by mapping relationship information and corresponding to the first parameter group. The mapping relationship information indicates a correspondence between the plurality of parameter groups and a plurality of durations. Each parameter group includes at least one of the following parameters:

a timing advance, a timing advance index, a timing advance calculation parameter, a timing advance drift rate, a timing advance drift rate index, a timing advance drift rate calculation parameter, a frequency offset pre-compensation, a frequency offset pre-compensation index, a frequency offset pre-compensation calculation parameter, a frequency offset pre-compensation drift rate, a frequency offset pre-compensation drift rate index, and a frequency offset pre-compensation drift rate calculation parameter.

Optionally, the first indication information further includes the first parameter information.

Optionally, the first indication information is carried in a common timing advance indication field in a system message.

Optionally, a common timing advance parameter carried in the common timing advance indication field is determined based on the first timing advance.

Optionally, the parameter information of the first timing advance includes a first drift rate, the first drift rate is a drift amount of the first timing advance in a first time unit, and a value of the first time unit is variable.

Alternatively, the parameter information of the first frequency offset pre -compensation includes a second drift rate, the second drift rate is a drift amount of the first frequency offset pre-compensation in a second time unit, and a value of the second time unit is variable.

Optionally, the method further includes: The satellite sends second indication information. The second indication information includes information about the value of the first time unit or information about the value of the second time unit.

Optionally, the second indication information is carried in the common timing advance indication field in the system message.

According to a third aspect, a satellite communication apparatus is provided, and includes: a transceiver unit, configured to receive first indication information, where the first indication information indicates a validity duration of first parameter information, and the first parameter information includes at least one type of the following information: a first timing advance, parameter information of the first timing advance, a first frequency offset pre-compensation, or parameter information of the first frequency offset pre-compensation; and a processing unit, configured to control the transceiver unit to perform uplink communication with a satellite in the validity duration based on the first parameter information.

Optionally, the processing unit is further configured to determine the validity duration of the first parameter information based on the first indication information and mapping relationship information. The mapping relationship information indicates a correspondence between a plurality of parameter groups and a plurality of durations, the first indication information indicates a first parameter group, and the validity duration is a duration corresponding to the first parameter group. Each parameter group includes at least one of the following parameters:

a timing advance, a timing advance index, a timing advance calculation parameter, a timing advance drift rate, a timing advance drift rate index, a timing advance drift rate calculation parameter, a frequency offset pre-compensation, a frequency offset pre-compensation index, a frequency offset pre-compensation calculation parameter, a frequency offset pre-compensation drift rate, a frequency offset pre-compensation drift rate index, and a frequency offset pre-compensation drift rate calculation parameter.

Optionally, the first indication information further includes the first parameter information.

Optionally, the first indication information is carried in a common timing advance indication field in a system message of a terrestrial communication system.

Optionally, a common timing advance parameter carried in the common timing advance indication field is determined based on the first timing advance.

Optionally, the parameter information of the first timing advance includes a first drift rate, the first drift rate is a drift amount of the first timing advance in a first time unit, and a value of the first time unit is variable.

Alternatively, the parameter information of the first frequency offset pre -compensation includes a second drift rate, the second drift rate is a drift amount of the first frequency offset pre-compensation in a second time unit, and a value of the second time unit is variable.

Optionally, the transceiver unit is further configured to receive second indication information. The second indication information includes information about the value of the first time unit or information about the value of the second time unit.

Optionally, the second indication information is carried in the common timing advance indication field in the system message.

According to a fourth aspect, a satellite communication apparatus is provided, and includes: a transceiver unit, configured to send first indication information, where the first indication information indicates a validity duration of first parameter information, and the first parameter information includes at least one type of the following information: a first timing advance, parameter information of the first timing advance, a first frequency offset pre-compensation, or parameter information of the first frequency offset pre-compensation; and a processing unit, configured to control the transceiver unit to perform uplink communication with a terminal device in the validity duration based on the first parameter information.

Optionally, the first indication information indicates a first parameter group in a plurality of parameter groups, and the validity duration is a duration indicated by mapping relationship information and corresponding to the first parameter group. The mapping relationship information indicates a correspondence between the plurality of parameter groups and a plurality of durations. Each parameter group includes at least one of the following parameters:

a timing advance, a timing advance index, a timing advance calculation parameter, a timing advance drift rate, a timing advance drift rate index, a timing advance drift rate calculation parameter, a frequency offset pre-compensation, a frequency offset pre-compensation index, a frequency offset pre-compensation calculation parameter, a frequency offset pre-compensation drift rate, a frequency offset pre-compensation drift rate index, and a frequency offset pre-compensation drift rate calculation parameter.

Optionally, the first indication information further includes the first parameter information.

Optionally, the first indication information is carried in a common timing advance indication field in a system message.

Optionally, a common timing advance parameter carried in the common timing advance indication field is determined based on the first timing advance.

Optionally, the parameter information of the first timing advance includes a first drift rate, the first drift rate is a drift amount of the first timing advance in a first time unit, and a value of the first time unit is variable.

Alternatively, the parameter information of the first frequency offset pre-compensation includes a second drift rate, the second drift rate is a drift amount of the first frequency offset pre-compensation in a second time unit, and a value of the second time unit is variable.

Optionally, the transceiver unit is further configured to send second indication information. The second indication information includes information about the value of the first time unit or information about the value of the second time unit.

Optionally, the second indication information is carried in the common timing advance indication field in the system message.

According to a fifth aspect, a satellite communication method is provided, and includes: A terminal device receives first indication information. The first indication information indicates parameter information of a first frequency offset pre-compensation, and the first frequency offset pre-compensation is a frequency offset pre-compensation used when a satellite performs downlink communication with the terminal device. The terminal device determines a second frequency offset pre-compensation based on the first frequency offset pre-compensation and the parameter information of the first frequency offset pre-compensation. The terminal device performs uplink communication with the satellite based on the second frequency offset pre-compensation.

The parameter information of the first frequency offset pre-compensation may be understood as a parameter used to determine a drift status of the first frequency offset pre-compensation, for example, a first frequency offset pre-compensation drift rate or an ephemeris parameter of the satellite. The ephemeris parameter of the satellite may include, for example, the moving speed or angle of the satellite. Descriptions of a same or similar situation are omitted below to avoid repetition.

According to the solution provided in this application, the terminal device can learn the parameter information of the first frequency offset pre-compensation by receiving the first indication information, and can further determine the drift of the first frequency offset pre-compensation, to automatically perform frequency offset pre-compensation tracking. Therefore, a frequency offset pre-compensation adjustment error and closed-loop pressure can be reduced.

Optionally, the first frequency offset pre-compensation includes a common frequency offset pre-compensation. The common frequency offset pre-compensation may be understood as a common frequency offset pre-compensation used by all terminal devices that communicate with the satellite, or a common frequency offset pre-compensation used in a cell provided by the satellite. Descriptions of a same or similar situation are omitted below to avoid repetition.

In this application, the first frequency offset pre-compensation drift rate may be understood as a drift amount of the first frequency offset pre-compensation in a time unit.

Optionally, a value of the time unit is variable.

Optionally, that the terminal device performs uplink communication with the satellite based on the second frequency offset pre-compensation includes: The terminal device determines a crystal oscillator frequency offset of the terminal device based on the second frequency offset pre-compensation, and performs uplink communication with the satellite based on the crystal oscillator frequency offset.

Specifically, the terminal device and the satellite may negotiate a frequency (for ease of understanding and differentiation, referred to as a downlink sending frequency below) of downlink communication in advance, and further determine a frequency offset based on a difference between the downlink sending frequency and a receiving frequency (for ease of understanding and differentiation, referred to as a downlink receiving frequency below) of the downlink signal. The frequency offset includes a Doppler frequency offset and a crystal oscillator frequency offset of the terminal device.

According to the solution of this application, the terminal device can determine, based on the first frequency offset pre-compensation and the drift amount of the first frequency offset pre-compensation, a frequency offset pre-compensation (namely, the second frequency offset pre-compensation) actually used by the satellite as described above, and determine the crystal oscillator frequency offset of the terminal device based on parameters such as a geographical location and ephemeris of the terminal device. In this way, frequency compensation can be performed for the crystal oscillator frequency offset in subsequent communication, to eliminate an impact of the crystal oscillator frequency offset of the terminal device on communication, and improve communication performance.

In this application, the first indication information indicates the parameter information of the first frequency offset pre-compensation. For example, the first indication information may include an index, an identifier, or the like corresponding to the parameter information (for example, a value of the first frequency offset pre-compensation drift rate or values of the ephemeris parameter and another parameter of the satellite) of the first frequency offset pre-compensation. Alternatively, the first indication information may include bits corresponding to a specific value of the parameter information of the first frequency offset pre-compensation. Descriptions of a same or similar situation are omitted below to avoid repetition.

Alternatively, in this application, the first indication information indicates the parameter information of the first frequency offset pre-compensation. For example, a correspondence between a plurality of parameter groups and a plurality of pieces of parameter information may be prestored in the terminal device, and the first indication information may indicate a parameter group (for example, a first parameter group). In this case, the terminal device may determine parameter information corresponding to the first parameter group as the parameter information of the first frequency offset pre-compensation. Descriptions of a same or similar situation are omitted below to avoid repetition.

In other words, in this case, the method further includes:
determining the parameter information of the first frequency offset pre-compensation based on the first indication information and mapping relationship information. The mapping relationship information indicates the correspondence between the plurality of parameter groups and the plurality of pieces of parameter information. The first indication information indicates the first parameter group. The parameter information of the first frequency offset pre-compensation is parameter information corresponding to the first parameter group. Each parameter group includes at least one of the following parameters:
a frequency offset pre-compensation, a frequency offset pre-compensation calculation parameter, or a validity duration of parameter information of the frequency offset pre-compensation.

Optionally, the first indication information is carried in a common timing advance indication field in a system message.

For example, the system message may be a system message of a terrestrial communication system.

The terrestrial communication system may also be referred to as a ground communication system, for example, a cellular network system. Descriptions of a same or similar situation are omitted below to avoid repetition.

It should be understood that the foregoing field (or field) used to carry the first indication information is merely an example for description, and this application is not limited thereto. For example, the first indication information may be carried in any cell-level field in the system message. Descriptions of a same or similar situation are omitted below to avoid repetition.

Optionally, the parameter information of the first frequency offset pre-compensation includes the drift amount of the first frequency offset pre-compensation in the time unit, and a value of the time unit is variable.

Optionally, the method further includes: The terminal device receives information about the value of the time unit.

Optionally, the information about the value of the time unit is carried in a common timing advance indication field in a system message.

It should be understood that the foregoing field (or field) used to carry the information about the value of the time unit is merely an example for description, and this application is not limited thereto. For example, the information about the value of the time unit may be carried in any cell-level field in the system message. Descriptions of a same or similar situation are omitted below to avoid repetition.

Optionally, the method further includes: The terminal device receives information about validity duration of the parameter information of the first frequency offset pre-compensation. That the terminal device performs uplink communication with the satellite based on the second frequency offset pre-compensation includes: The terminal device performs uplink communication with the satellite in the validity duration based on the second frequency offset pre-compensation.

According to the solution provided in this application, the terminal device can learn the validity duration of the parameter information of the first frequency offset pre-compensation by receiving the information about the validity duration of the parameter information of the first frequency offset pre-compensation. In this way, there is no need to listen to whether the parameter information of the first frequency offset pre-compensation is updated in the validity duration. This can improve communication performance while reducing energy consumption of the terminal device and communication complexity.

According to a sixth aspect, a satellite communication method is provided, and includes: A satellite receives first indication information. The first indication information indicates parameter information of a first frequency offset pre-compensation. The first frequency offset pre-compensation is a frequency offset pre-compensation used when the satellite performs downlink communication with a terminal device. The satellite performs uplink communication with the terminal device based on a second frequency offset pre-compensation. The second frequency offset pre-compensation is a frequency offset pre-compensation obtained through changing the first frequency offset pre-compensation based on the parameter information of the first frequency offset pre-compensation.

Optionally, the second frequency offset pre-compensation is used to determine a crystal oscillator frequency offset of the terminal device.

Optionally, the first indication information indicates the parameter information of the first frequency offset pre-compensation.

Optionally, the first indication information indicates a first parameter group, and the parameter information of the first frequency offset pre-compensation is parameter information indicated by mapping relationship information and corresponding to the first parameter group. The mapping relationship information indicates a correspondence between a plurality of parameter groups and a plurality of pieces of parameter information. Each parameter group includes at least one of the following parameters:

a frequency offset pre-compensation, a frequency offset pre-compensation calculation parameter, or a validity duration of parameter information of the frequency offset pre-compensation.

Optionally, the first indication information is carried in a common timing advance indication field in a system message.

Optionally, the parameter information of the first frequency offset pre-compensation includes a drift amount of the first frequency offset pre-compensation in a time unit, and a value of the time unit is variable.

Optionally, the method further includes: The satellite sends information about the value of the time unit.

Optionally, the information about the value of the time unit is carried in the common timing advance indication field in the system message.

Optionally, the method further includes: The satellite sends information about a validity duration of the parameter information of the first frequency offset pre-compensation. That the satellite performs uplink communication with the terminal device based on a second frequency offset pre-compensation includes: The satellite performs uplink communication with the terminal device in the validity duration based on the second frequency offset pre-compensation.

According to a seventh aspect, a satellite communication apparatus is provided, and includes: a transceiver unit, configured to receive first indication information, where the first indication information indicates parameter information of a first frequency offset pre-compensation, and the first frequency offset pre-compensation is a frequency offset pre-compensation used when a satellite performs downlink communication with a terminal device; and a processing unit, configured to: determine a second frequency offset pre-compensation based on the first frequency offset pre-compensation and the parameter information of the first frequency offset pre-compensation, and control the transceiver unit to perform uplink communication with the satellite based on the second frequency offset pre-compensation.

Optionally, the processing unit is further configured to: determine a crystal oscillator frequency offset of the terminal device based on the second frequency offset pre-compensation, and control the transceiver unit to perform uplink communication with the satellite based on the crystal oscillator frequency offset.

Optionally, the first indication information includes the parameter information of the first frequency offset pre-compensation.

Optionally, the method further includes: determining the parameter information of the first frequency offset pre-compensation based on the first indication information and mapping relationship information. The mapping relationship information indicates a correspondence between a plurality of parameter groups and a plurality of pieces of parameter information. The first indication information indicates a first parameter group. The parameter information of the first frequency offset pre-compensation is parameter information corresponding to the first parameter group. Each parameter group includes at least one of the following parameters:

a frequency offset pre-compensation, a frequency offset pre-compensation calculation parameter, or a validity duration of parameter information of the frequency offset pre-compensation.

Optionally, the first indication information is carried in a common timing advance indication field in a system message.

Optionally, the parameter information of the first frequency offset pre-compensation includes a drift amount of the first frequency offset pre-compensation in a time unit, and a value of the time unit is variable.

Optionally, the transceiver unit is further configured to receive information about the value of the time unit.

Optionally, the information about the value of the time unit is carried in the common timing advance indication field in the system message of a terrestrial communication system.

Optionally, the transceiver unit is further configured to receive information about a validity duration of the parameter information of the first frequency offset pre-compensation. The processing unit is further configured to control the transceiver unit to perform uplink communication with the satellite in the validity duration based on the second frequency offset pre-compensation.

According to an eighth aspect, a satellite communication apparatus is provided, and includes: a transceiver unit, configured to send first indication information, where the first indication information indicates parameter information of a first frequency offset pre-compensation, and the first frequency offset pre-compensation is a frequency offset pre-compensation used when a satellite performs downlink communication with a terminal device; and a processing unit, configured to control the transceiver unit to perform uplink communication with the terminal device based on a second frequency offset pre-compensation, where the second frequency offset pre-compensation is a frequency offset pre-compensation obtained through changing the first frequency offset pre-compensation based on the parameter information of the first frequency offset pre-compensation.

Optionally, the second frequency offset pre-compensation is used to determine a crystal oscillator frequency offset of the terminal device.

Optionally, the first indication information indicates the parameter information of the first frequency offset pre-compensation.

Optionally, the first indication information indicates a first parameter group, and the parameter information of the first frequency offset pre-compensation is parameter information indicated by mapping relationship information and corresponding to the first parameter group. The mapping relationship information indicates a correspondence between a plurality of parameter groups and a plurality of pieces of parameter information. Each parameter group includes at least one of the following parameters:

a frequency offset pre-compensation, a frequency offset pre-compensation calculation parameter, or a validity duration of parameter information of the frequency offset pre-compensation.

Optionally, the first indication information is carried in a common timing advance indication field in a system message.

Optionally, the parameter information of the first frequency offset pre-compensation includes a drift amount of the first frequency offset pre-compensation in a time unit, and a value of the time unit is variable.

Optionally, the transceiver unit is further configured to send information about the value of the time unit.

Optionally, the information about the value of the time unit is carried in the common timing advance indication field in the system message of a terrestrial communication system.

Optionally, the transceiver unit is further configured to send information about a validity duration of the parameter information of the first frequency offset pre-compensation. The processing unit is further configured to control the transceiver unit to perform uplink communication with the terminal device in the validity duration based on the second frequency offset pre-compensation.

According to a ninth aspect, a wireless communication apparatus is provided, and includes modules or units configured to perform the method according to any one of the first aspect or the possible implementations of the first aspect.

According to a tenth aspect, a wireless communication apparatus is provided, and includes modules or units configured to perform the method according to any one of the second aspect or the possible implementations of the second aspect.

According to an eleventh aspect, a wireless communication apparatus is provided, and includes modules or units configured to perform the method according to any one of the fifth aspect or the possible implementations of the fifth aspect.

According to a twelfth aspect, a wireless communication apparatus is provided, and includes modules or units configured to perform the method according to any one of the sixth aspect or the possible implementations of the sixth aspect.

According to a thirteenth aspect, a communication device is provided, and includes a processor. The processor is coupled to a memory, and may be configured to perform the methods according to the first aspect, the possible implementations of the first aspect, the fifth aspect, or the possible implementations of the fifth aspect. Optionally, the communication device further includes the memory. Optionally, the communication device further includes a communication interface, and the processor is coupled to the communication interface. Optionally, the communication device further includes a communication interface, and the processor is coupled to the communication interface.

In an implementation, the communication device is a satellite. When the communication device is the satellite, the communication interface may be a transceiver or an input/output interface.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a fourteenth aspect, a communication device is provided, and includes a processor. The processor is coupled to a memory, and may be configured to execute instructions in the memory, to implement the methods in the second aspect, the possible implementations of the second aspect, the sixth aspect, or the possible implementations of the sixth aspect. Optionally, the communication device further includes the memory. Optionally, the communication device further includes a communication interface, and the processor is coupled to the communication interface. Optionally, the transceiver may be a transceiver circuit. Optionally, the input/output interface may be an input/output circuit.

In an implementation, the communication device is a terminal device. When the communication device is the terminal device, the communication interface may be a transceiver or an input/output interface. Optionally, the transceiver may be a transceiver circuit. Optionally, the input/output interface may be an input/output circuit.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a fifteenth aspect, a communication apparatus is provided, and includes an input circuit, an output circuit, and a processing circuit. The processing circuit is configured to receive a signal through the input circuit, and transmit a signal through the output circuit, to implement the method according to any one of the first aspect, the second aspect, the fifth aspect, or the sixth aspect, and the possible implementations of the aspects.

In a specific implementation process, the communication apparatus may be a chip, the input circuit may be an input pin, the output circuit may be an output pin, and the processing circuit may be a transistor, a gate circuit, a trigger, various logic circuits, or the like. A signal input and received by the input circuit may be received and input by, for example, but not limited to, a receiver. A signal output by the output circuit may be, for example, but not limited to, output to a transmitter and transmitted by the transmitter. The input circuit and the output circuit may be different circuits, or may be a same circuit. In this case, the circuit is used as an input circuit and an output circuit at different times. Embodiments of this application impose no limitation on a specific implementation of the processor and various circuits.

According to a sixteenth aspect, a processing apparatus is provided, and includes a processor and a memory. The processor is configured to: read instructions stored in the memory, receive a signal through a receiver, and transmit a signal through a transmitter, to perform the method according to any one of the first aspect, the second aspect, the fifth aspect, or the sixth aspect, and the possible implementations of the aspects.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

It should be understood that, a related data exchange process such as sending indication information may be a process of outputting the indication information from the processor, and receiving capability information may be a process of receiving the input capability information by the processor. Specifically, data output by the processor may be output to a transmitter, and input data received by the processor may be from a receiver. The transmitter and the receiver may be collectively referred to as a transceiver.

The processor according to the sixteenth aspect may be a chip. The processor may be implemented by using hardware or software. When the processor is implemented by using the hardware, the processor may be a logic circuit, an integrated circuit, or the like; or when the processor is implemented by using the software, the processor may be a general purpose processor, and is implemented by reading software code stored in the memory. The memory may be integrated into the processor, or may exist independently outside the processor.

According to a seventeenth aspect, a processing apparatus is provided, and includes a communication interface and a processing circuit. The communication interface is configured to obtain to-be-processed data. The processing circuit is configured to process the to-be-processed data according to the method in any one of the possible implementations of the first aspect or the fifth aspect.

According to an eighteenth aspect, a processing apparatus is provided, and includes a communication interface and a processing circuit. The communication interface is configured to send indication information according to the method in any one of the possible implementations of the second aspect or the sixth aspect. The processing circuit is configured to generate the indication information.

According to a nineteenth aspect, a computer program product is provided. The computer program product includes a computer program (which may also be referred to as code or instructions). When the computer program is run, a computer is enabled to perform the method according to any one of the first aspect, the second aspect, the fifth aspect, or the sixth aspect, and the possible implementations of the aspects.

According to a twentieth aspect, a computer-readable medium is provided. The computer-readable medium stores a computer program (which may also be referred to as code or instructions). When the computer program is run on a computer, the computer is enabled to perform the method according to any one of the first aspect, the second aspect, the fifth aspect, or the sixth aspect, and the possible implementations of the aspects.

According to a twenty-first aspect, a communication system is provided, and includes the satellite and the terminal device.

**BRIEF DESCRIPTION OF DRAWINGS**

FIG. 1 is a schematic diagram of an example of a communication system to which a satellite communication method according to this application is applicable;

FIG. 2 is a schematic diagram of another example of a communication system to which a satellite communication method according to this application is applicable;

FIG. 3 is a schematic diagram of an example of an application scenario of a common TA in a satellite system according to this application;

FIG. 4 is a schematic diagram of an example of an application scenario of a common TA drift parameter in a satellite system according to this application;
FIG. 5 is a schematic diagram of another example of an application scenario of a common TA drift parameter in a satellite system according to this application;
FIG. 6 is a schematic flowchart of an example of a satellite communication method according to this application;
FIG. 7 is a schematic flowchart of another example of a satellite communication method according to this application;
FIG. 8 is a schematic diagram of impact of a crystal oscillator frequency offset on communication;
FIG. 9 is a schematic flowchart of still another example of a satellite communication method according to this application;
FIG. 10 is a schematic flowchart of still another example of a satellite communication method according to this application;
FIG. 11 is a schematic flowchart of still another example of a satellite communication method according to this application;
FIG. 12 is a schematic block diagram of a communication apparatus according to an embodiment of this application;
FIG. 13 is another schematic block diagram of a communication apparatus according to an embodiment of this application;
FIG. 14 is a schematic block diagram of a terminal device according to an embodiment of this application; and
FIG. 15 is a schematic block diagram of a satellite according to an embodiment of this application.

**DESCRIPTION OF EMBODIMENTS**

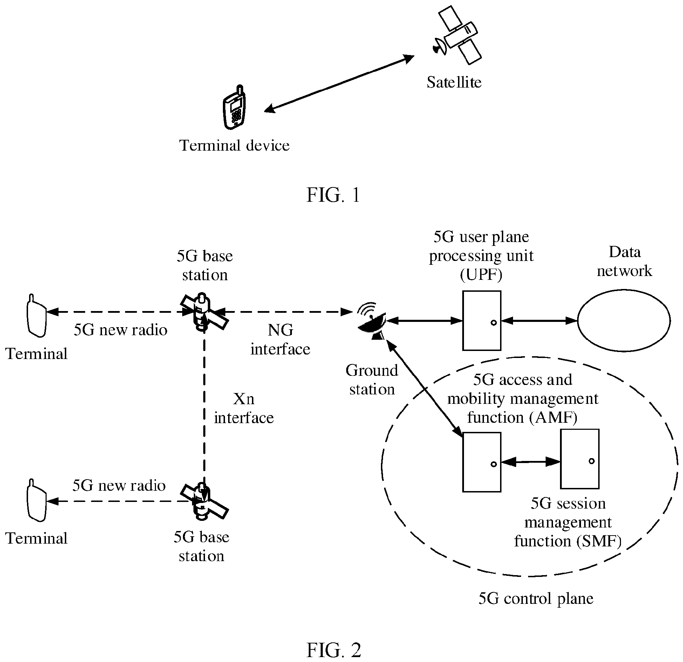

FIG. 1 is a schematic diagram of an architecture of a communication system to which an embodiment of this application is applicable. As shown in FIG. 1, the communication system may include at least one network device, for example, a network device shown in FIG. 1. The communication system may further include at least one terminal device, for example, a terminal device shown in FIG. 1. The network device may communicate with the terminal device through a radio link.

It should be understood that the network device in the wireless communication system may be any device that has wireless receiving and sending functions. The device includes but is not limited to a base station controller (base station controller, BSC), a base transceiver station (base transceiver station, BTS), and the like. Alternatively, the device may be one or a group (including a plurality of antenna panels) of antenna panels of a base station in a 5G system, a satellite, or the like.

It should be understood that the terminal device and UE may also be referred to as an access terminal device, a subscriber unit, a subscriber station, a mobile station, a remote station, a remote terminal device, a mobile device, a user terminal device, a terminal device, a wireless communication device, a user agent, or a user apparatus. The UE in embodiments of this application may be a mobile phone (mobile phone), a smart watch (smart watch), a tablet computer (pad), a computer with wireless receiving and sending functions, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), or the like. An application scenario is not limited in embodiments of this application.

The following describes in detail the technical solutions of this application by using a satellite communication system as an example.

In the satellite communication system, a network device may include a satellite.

The technical solutions in embodiments of this application may be applied to various communication systems, for example, a global system of mobile communications (global system of mobile communications, GSM) system, a code division multiple access (code division multiple access, CDMA) system, and a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a fifth generation (5th generation, 5G) system or a new radio (new radio, NR), a device-to-device (device-to-device, D2D) communication system, a machine communication system, an internet of vehicles communication system, a satellite communication system, or a future communication system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a satellite phone, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

The network device in embodiments of this application may be a device configured to communicate with the terminal device. The network device may be a base station (base transceiver station, BTS) in a global system of mobile communications (global system of mobile communications, GSM) system or code division multiple access (code division multiple access, CDMA), a base station (NodeB, NB) in a wideband code division multiple access (wideband code division multiple access, WCDMA) system, an evolved base station (evolved NodeB, eNB or eNodeB) in an LTE system, a radio controller in a cloud radio access network (cloud radio access network, CRAN) scenario. Alternatively, the network device may be a relay station, an access point, a vehicle-mounted device, a wearable device, a terminal that performs a function of a base station in D2D communication or machine-to-machine communication, a network device in a 5G network, a network device in a future evolved PLMN network, and the like. This is not limited in embodiments of this application.

In addition, the solutions provided in this application may be applied to the field of satellite communication, for example, members of 3GPP integrate satellite communication and 5G technologies. FIG. 2 shows a network application architecture of the technology. A ground mobile terminal UE accesses a network through 5G new radio. A 5G base station is deployed on a satellite, and is connected to a core network on the ground through a radio link. In addition, there is a radio link between satellites to implement signaling exchange and user data transmission between base stations. All network elements in FIG. 2 and their interfaces are described as follows:

A terminal device is a mobile device that supports 5G new radio, for example, a mobile phone and a pad. The terminal device may access a satellite network through an air interface, and initiate services such as making a call or internet surfing.

The 5G base station mainly provides radio access services, schedules radio resources for access terminals, and provides reliable radio transmission protocols and data encryption protocols.

A 5G core network provides services such as user access control, mobility management, session management, user security authentication, and accounting. The 5G core network includes a plurality of functional units, and can be divided into a control plane function entity and a data plane function entity. An access and mobility management unit (AMF) is responsible for user access management, security authentication, and mobility management. A user plane unit (UPF) is responsible for functions such as user plane data transmission management, traffic statistics collection, and lawful interception.

A ground station is responsible for forwarding signaling and service data between a satellite base station and the 5G core network.

The 5G new radio is a radio link between a terminal and a base station.

An Xn interface is an interface between the 5G base station and a base station, and is used for signaling exchange such as handover.

An NG interface is an interface between the 5G base station and the 5G core network, and mainly exchanges user service data and signaling such as NAS of the core network.

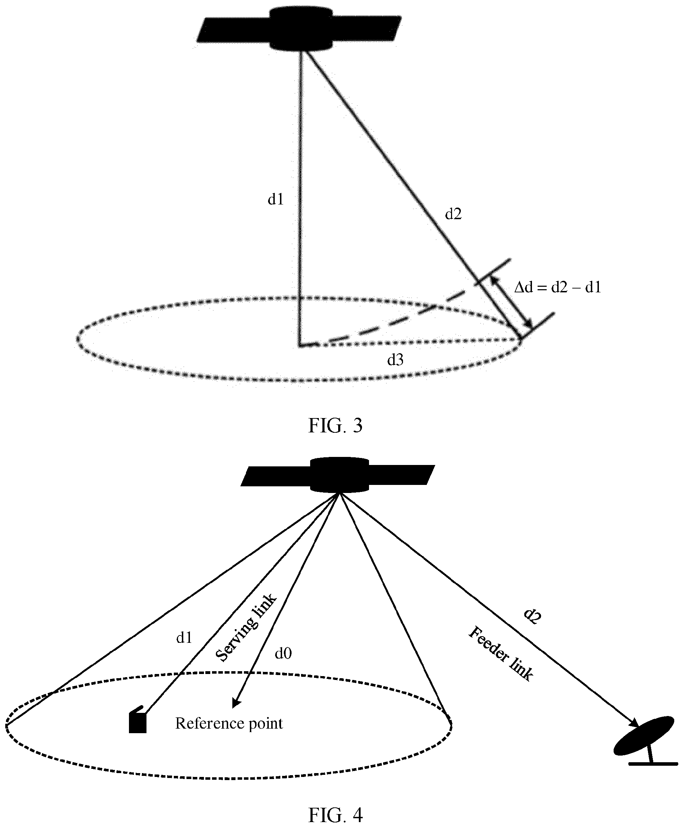

There is a common round trip delay (round trip delay, RTD) between a user in a cell and a satellite due to a height of a satellite base station. As shown in FIG. 3, an example in which a satellite reaches the top is used. If a reference point is an under-satellite point, a common RTD in a cell is 2 x d1. Another user has an RTD in addition to the delay, and an edge user has a maximum RTD of $2 \times (d1 + \Delta d)$. For a large RTD in satellite communication, it is considered that a terminal device compensates for the common RTD of $2 \times d1$ in advance during access. A difference between round trip delays of all terminal devices does not exceed $2 \times \Delta d$, and the value is far less than the common RTD. The common RTD may be notified to the terminal device in a broadcast manner. In addition, a common TA may be related to a TA error in addition to the RTD. The error may be, for example, a maximum TA error among all possible TA errors of users. Alternatively, the error may be included in a common TA. Alternatively, a parameter may be added to indicate the maximum TA error among all possible TA errors of users. The error is a type of common TA. After access, a large TA drift may be introduced due to movement of the satellite. For example, a low earth orbit satellite with an orbit height of 600 km can move at a speed of 7.56 km/s. For a cell with a large or small elevation angle, a maximum time offset within 200 ms may reach 158 Ts (Ts = 64 Tc). If an existing TA adjustment manner (adjusting the speed and a maximum amount of one TA adjustment) is directly used, corresponding requirements cannot be met. In this application, a manner of broadcasting a TA drift rate may be used. A user automatically performs a part of TA tracking based on the broadcast TA drift rate between two closed-loop TA adjustments, to reduce a TA adjustment error and closed-loop pressure.

In this application, the common TA and the TA drift rate broadcast by the satellite may be continuously updated as the satellite moves.

For example, FIG. 4 is a schematic diagram of a transparent forwarding mode. As shown in FIG. 4, a satellite forwards an uplink signal to a ground station in a forwarding manner, and a communication distance between a user and the ground station includes a serving link and a feeder link. If the user has positioning and knows an ephemeris, a TA drift on a serving link side may be obtained and compensated by the user based on a location of the user relative to the satellite. If parameters such as a TA of the feeder link also need to be compensated on a user side, the satellite needs to broadcast a TA drift parameter of the feeder link part, for example, broadcast a TA drift rate, and the user may automatically adjust an uplink TA between two closed-loop TA adjustments. Satellite movement, a distance between the satellite and the ground station, and switching of the ground station all may cause the TA parameter of the part to change with time.

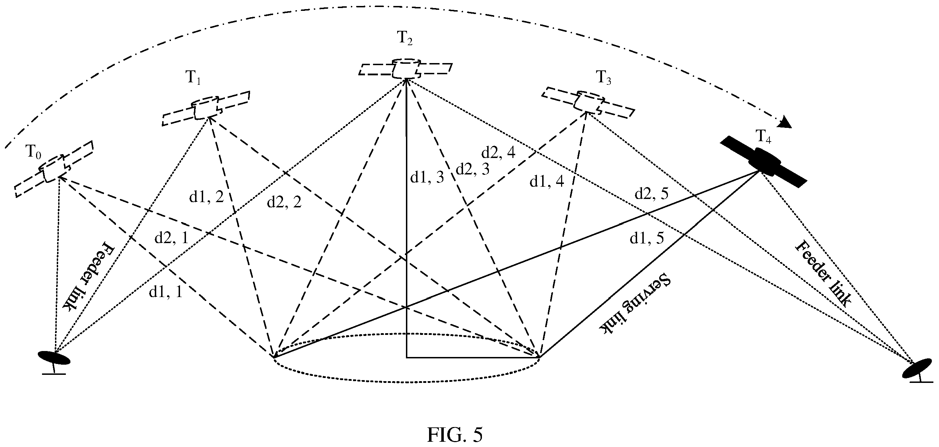

For another example, FIG. 5 is a schematic diagram of a gaze mode. As shown in FIG. 5, a beam changes an angle as a satellite moves in the gaze mode. This provides a service for a fixed area on the ground in a long time.

Therefore, regardless of whether the gaze mode is transparent forwarding or non-transparent forwarding, a user needs to listen to a broadcast signal in real time to update a TA drift parameter of a serving link.

In this application, parameter information of a timing advance may include parameter information used to determine a drift status of the timing advance, such as a timing advance drift rate or a satellite movement parameter. For ease of understanding and description, the following describes in detail the solutions of this application by using an example in which the timing advance drift rate is used as the parameter information of the timing advance.

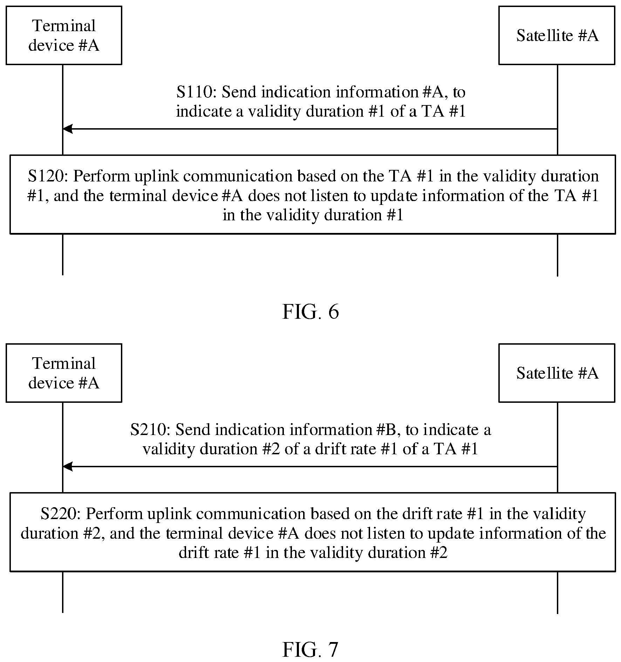

FIG. 6 is a schematic flowchart of a satellite communication method 100 according to this application. The method 100 can effectively reduce energy consumption of a terminal device and increased communication complexity that are caused by listening to a common TA.

As shown in FIG. 6, S110: A satellite #A may send indication information #A (namely, an example of the first indication information in the first aspect) to a terminal device #A.

First, a manner of sending the indication information #A is described.

By way of example but not a limitation, the satellite #A may directly send the indication information #A to the terminal device #A.

Alternatively, the satellite #A may send the indication information #A to a satellite #B, and the satellite #B sends the indication information #A to the terminal device #A.

Alternatively, the satellite #A may send the indication information #A to another network device, for example, a ground base station, and the ground base station sends the indication information #A to the terminal device #A.

Alternatively, the satellite #A may send the indication information #A to another terminal device, for example, a terminal device #B, and the terminal device #B sends the indication information #A to the terminal device #A (for example, by using a technology such as D2D communication).

The indication information #A may indicate a validity duration (denoted as a validity duration #1) of a TA #1 (namely, an example of the first timing advance in the first aspect).

The TA #1 may be a common TA used by the satellite #A. In this case, the indication information #A may be carried in a broadcast message or a multicast message.

Alternatively, the TA #1 may be a dedicated TA configured by the satellite #A for the terminal device #A.

In this case, for example, the indication information #A may be carried in a broadcast message or a multicast message. In addition, the indication information #A may include a dedicated identifier of the terminal device #A, for example, a device identifier of the terminal device #A or an identifier of the terminal device #A in a cell provided by the satellite #A. In this way, a terminal device in the cell can determine, based on the dedicated identifier of the terminal device #A, that the TA #1 is the dedicated TA of the terminal device #A.

For another example, the indication information #A may be carried in a unicast message of the terminal device #A.

It should be understood that, when the TA#1 is the common TA used by the satellite #A, parameter information of the TA #1 indicated by the satellite #A to the terminal device #A may further include a common parameter related to a timing error, for example, TA margin, where TA margin indicates an error of the TA. When the parameter information of the TA #1 indicated by the satellite #A to the terminal device #A includes TA margin, the terminal device #A may adjust the TA according to the following formula:

$$TA = (N_{TA} + N_{TA,offset} + X) \times T_C$$

$N_{TA}$ indicates a time offset, and the terminal device #A may determine $N_{TA}$ based on a geographical location of the terminal device #A and a location of the satellite #A. $N_{TA,offset}$ is a common timing advance parameter (for example, n-TimingAdvanceOffset) related to TDD and FDD in ground communication. Tc is a time unit. Tc may be, for example, a sampling interval of an orthogonal frequency division multiplexing (orthogonal frequency division multiplexing, OFDM) symbol in NR, and is $5.086 \times 10^{(-11)}$s. In the foregoing formula, it is assumed that time units of X, $N_{TA}$, and $N_{TA,offset}$ each are $T_C$. X indicates a common timing offset. The terminal device #A may obtain X by multiplying a timing offset indicated by the satellite #A and a default time unit, or directly obtain a value of X based on an indication of the satellite #A.

When X uses a time unit different from $T_C$, the terminal device #A may adjust the TA according to the following formula:

$$TA = (N_{TA} + N_{TA,offset}) \times T_C + X$$

When the satellite #A separately indicates TA_margin and the common TA to the terminal device #A, that is, when TA margin and the common TA are carried in different messages, the terminal device #A may adjust the TA according to the following formula:

$$TA = (N_{TA} + N_{TA, offset} + X + Y) \times TC,$$

$$TA = (N_{TA} + N_{TA,offset}) \times T_C + X + Y,$$

$$TA = (N_{TA} + N_{TA,offset} + X) \times T_C + Y,$$

or

$$TA = (N_{TA} + N_{TA,offset} + Y) \times T_C + X,$$

where

Y indicates a parameter related to a timing offset error. The terminal device #A may obtain X and Y by multiplying the timing offset indicated by the satellite #A and the default time unit. For example, XI is the timing offset indicated by the satellite #A, and K1 is a default unit of X. In this case, the terminal device #A may obtain the value of X through calculation: $X = XI \times K1$. For another example, Y1 is the timing offset indicated by the satellite #A, and K2 is a default unit of Y In this case, the terminal device #A may obtain a value of Y through calculation: $Y = Y1 \times K2$. K1 and K2 may be the same or different. This is not specifically limited in this application. Alternatively, the terminal device #A directly obtains the values of X and Y based on an indication of the satellite #A. Alternatively, the terminal device #A directly obtains one of X and Y based on an indication of the satellite #A, and obtains the other by multiplying the timing offset indicated by the satellite #A and the default time unit.

It should be noted that, when the terminal device #A compensates a timing offset on a serving link side, and the satellite #A compensates a timing offset on a feeder link side, the value of X may be equal to 0, and the satellite #A may or may not indicate the value of X. When the satellite #A does not indicate the value of X, the satellite #A further needs to indicate the value of Y

The following describes content indicated by the indication information #A.

By way of example but not a limitation, the validity duration #1 may include one or more specified time periods in this application. In this case, the indication information #A may indicate a quantity of time periods included in the validity duration #1.

The time period may be specified in a communication system or a communication protocol, or may be determined through negotiation by a network device (for example, a satellite, a ground base station, or a core network device) and a terminal device. This is not specifically limited in this application.

For example, the time period may be a sending period of a system message (system information blocks, SIB) in a ground communication system.

In this application, for example, the indication information #A may indicate a start moment (or an end moment) and a length of the validity duration #1.

For another example, the indication information #A may indicate the start moment and the end moment of the validity duration #1.

Alternatively, the indication information #A may indicate only the length of the validity duration #1. In this case, the terminal device #A and the satellite #A may agree on the start moment or the end moment of the validity duration #1. For example, the start moment of the validity duration #1 is a moment at which the terminal device #A receives and obtains the indication information #A, or a start moment of a time period in which the terminal device #A receives and obtains the indication information #A. Alternatively, the end moment of the validity duration #1 is an end moment of the time period in which the terminal device #A receives and obtains the indication information #A.

In this application, a value of the validity duration #1 may be randomly determined based on an actual situation.

This is not particularly limited in this application. For example, the satellite #A may determine the value of the validity duration #1 based on a moving speed of the satellite #A, a geographical location of a service area, and the like.

The following describes an indication manner of the indication information #A.

In this application, the indication information #A may explicitly indicate the validity duration #1 (that is, manner 1), or the indication information #A may implicitly indicate the validity duration #1 (that is, manner 2). The following separately describes the foregoing two manners in detail.

Manner 1

Specifically, the indication information #A may include an index or an identifier corresponding to the validity duration #1, or may include bits corresponding to a value (for example, the quantity of included time periods) of the validity duration #1.

By way of example but not a limitation, in this application, the indication information #A may be carried in a SIB, for example, a SIB 1.

In this application, the indication information #A may be sent with indication information (denoted as indication information #C) of the TA #1 or indication information (denoted as indication information #D) of a drift rate of the TA #1 at the same time. In other words, the indication information #A may be carried in a same message, for example, the SIB 1, with the indication information #C and/or the indication information #D.

In this application, a serving cell configuration common SIB (ServingCellConfigCommonSIB) field in the SIB 1 includes a common parameter of the cell, for example, a common timing advance parameter (for example, n-TimingAdvanceOffset) related to time-division duplex (time-division duplex, TDD) and frequency-division duplex (frequency-division duplex, FDD) in ground communication. The parameter is similar to a common TA in satellite communication, and the terminal device needs to perform common TA compensation. Therefore, in this application, fields related to satellite communication may be added to the ServingCellConfigCommonSIB field, that is, a common timing advance (TimingAdvanceCommon) field, a common timing advance drift rate (TimingAdvanceRateCommon) field, and a time domain-related validity duration (TimingAdvanceRateValidPeriod) field. The TimingAdvanceCommon field may carry information about a common timing advance (for example, the TA #1). The TimingAdvanceRateCommon field may carry information about a drift rate (for example, the drift rate of the TA #1) of the common timing advance. The TimingAdvanceRateValidPeriod field may carry a validity duration (for example, the validity duration #1) of the common timing advance.

Manner 2

Specifically, mapping relationship information (denoted as a mapping relationship #A, namely, an example of the mapping relationship in the first aspect) may be prestored in the terminal device #A, the mapping relationship #A may include a mapping relationship between a plurality of parameter groups and a plurality of durations.

The mapping relationship #A may be specified in a communication system or a communication protocol, or may be determined through negotiation by the satellite #A and the terminal device #A. This is not specifically limited in this application.

In this application, each parameter group may include one or more of the following parameters:

a timing advance, a timing advance index, a timing advance calculation parameter (namely, a parameter used to calculate the timing advance), a timing advance drift rate (namely, an example of parameter information of the timing advance), a timing advance drift rate index, and a timing advance drift rate calculation parameter (namely, a parameter used to calculate the timing advance drift rate).

In this case, the indication information #A may indicate a parameter group #A (namely, an example of the first parameter group in the first aspect), and the validity duration #1 may be a duration indicated by the mapping relationship #A and corresponding to the parameter group #A.

In addition, the parameter group #A may be a parameter configured by the satellite #A for the terminal device #A and used for satellite communication. For example, when the parameter group includes a timing advance, the timing advance in the parameter group #A may be a common timing advance actually used by the terminal device #A, namely, the TA #1.

It should be noted that, in the manner 2, the parameter in the parameter group may be carried in the foregoing SIB, for example, the SIB 1. For example, the TimingAdvanceCommon field may carry information about the timing advance, the timing advance index, and the timing advance calculation parameter. The TimingAdvanceRateCommon field may carry information about the timing advance drift rate, the timing advance drift rate index, and the timing advance drift rate calculation parameter.

By way of example but not a limitation, the mapping relationship in the manner 2 may be as follows:

| Common TA | TA drift rate | Value of a validity duration |
|---|---|---|
| 4 ms | 0 ms/s to 10 ms/s | Three SIB 1 periods |
| | 10 ms/s to 30 ms/s | Four SIB 1 periods |
| | 30 ms/s to 60 ms/s | Five SIB 1 periods |
| | 60 ms/s and above | Six SIB 1 periods |

S120: The terminal device #A performs uplink communication with the satellite #A in the validity duration #1 based on the TA #1. In addition, in this application, the terminal device #A does not need to listen to, in the validity duration #1, information or a message sent by the satellite #A and used to update the TA #1.

It should be noted that, in this application, in the validity duration #1, the terminal device #A does not listen to the information or the message used to update the TA #1, but the satellite #A may still send the information or the message used to update the TA #1.

Alternatively, in the validity duration #1, the satellite #A may no longer send the information or the message used to update the TA #1.

By way of example but not a limitation, the indication information #A may be transmitted in an access process of the terminal device #A or after the terminal device #A accesses. This is not specifically limited in this application.

FIG. 7 is a schematic flowchart of a satellite communication method 200 according to this application. The method 200 can effectively reduce energy consumption of a terminal device and increased communication complexity that are caused by listening to a TA drift rate.

As shown in FIG. 7, S210: A satellite #A may send indication information #B (namely, another example of the first indication information in the first aspect) to a terminal device #A.

A manner of sending the indication information #B is similar to that of sending the indication information #A. Detailed description is omitted herein to avoid repetition.

The indication information #B may indicate a validity duration (denoted as a validity duration #2) of a drift rate (denoted as a drift rate #1, namely, an example of the parameter information in the first aspect) of a TA #1 (namely, an example of the first timing advance in the first aspect).

The TA #1 may be a common TA used by the satellite #A. In this case, the indication information #B may be carried in a broadcast message or a multicast message.

Alternatively, the TA #1 may be a dedicated TA configured by the satellite #A for the terminal device #A.

In this case, for example, the indication information #B may be carried in a broadcast message or a multicast message. In addition, the indication information #B may include a dedicated identifier of the terminal device #A, for example, a device identifier of the terminal device #A or an identifier of the terminal device #A in a cell provided by the satellite #A. In this way, a terminal device in the cell can determine, based on the dedicated identifier of the terminal device #A, that the TA #1 is the dedicated TA of the terminal device #A.

For another example, the indication information #B may be carried in a unicast message of the terminal device #A.

Content indicated by the indication information #B may be similar to that indicated by the indication information #A. For example, the indication information #B may indicate a quantity of time periods included in the validity duration #2.

In this application, a value of the validity duration #2 may be randomly determined based on an actual situation. This is not particularly limited in this application. For example, the satellite #A may determine the value of the validity duration #2 based on a moving speed of the satellite #A, a geographical location of a service area, and the like.

An indication manner of the indication information #B may be similar to that of the indication information #A. To be specific, the indication information #B may explicitly indicate the validity duration #2, or the indication information #B may implicitly indicate the validity duration #2. Detailed description is omitted to avoid repetition.

It should be understood that, when the satellite #A indicates the drift rate #1 (denoted as TA_common rate) to the terminal device #A, and the drift rate #1 is a common TA drift rate, the terminal device #A may obtain a TA drift rate (denoted as TA_UEpecific_rate) on a serving link side based on a geographical location and a satellite ephemeris of the terminal device #A, to finally determine the TA drift rate TA_rate of the terminal device #A:

$$TA\_rate = TA\_common\_rate + TA\_UEpecific\_rate$$

The common TA drift rate may be an indicated normalized value.

When the TA drift rate is introduced, during uplink synchronization, the terminal device #A needs to adjust the TA according to the following formula:

$$TA\_new = TA\_old + TA\_rate \times \Delta t + TAC$$

TA_new indicates a TA obtained through adjustment at a current moment. TA_old indicates a TA obtained through comprehensive calculation at a previous moment. $\Delta t$ indicates a time interval from the previous moment to the current moment. TAC indicates a closed-loop timing adjustment indication. The satellite #A may indicate TAC by using user-level signaling, and it is assumed that the terminal device #A receives the signaling. In this case, the terminal device #A performs timing adjustment in an agreed time. In addition, the terminal device #A further needs to perform timing adjustment based on the TA drift rate. Therefore, a timing advance adjustment introduced by an uplink signal sent by the terminal device #A is calculated based on open-loop and closed-loop information.

S220: In the validity duration #2, the terminal device #A may determine a TA #2 based on the drift rate #1 and the TA #1, and perform uplink communication with the satellite #A based on the TA #2. In addition, in this application, the terminal device #A does not need to listen to, in the validity duration #2, information or a message sent by the satellite #A and used to update the drift rate #1.

It should be noted that, in this application, in the validity duration #2, the terminal device #A does not listen to the information or the message used to update the drift rate #1, but the satellite #A may still send the information or the message used to update the drift rate #1.

Alternatively, in the validity duration #2, the satellite #A may no longer send the information or the message used to update the drift rate #1.

By way of example but not a limitation, the indication information #B may be transmitted in an access process of the terminal device #A or after the terminal device #A accesses. This is not specifically limited in this application.

It should be noted that the method 100 and the method 200 may be used separately or in combination. This is not particularly limited in this application. For example, a SIB may carry information about a common timing advance, a validity duration of the common timing advance, a common timing advance drift rate, and a validity duration of the common timing advance drift rate.

For another example, the validity duration of the common timing advance may be the same as the validity duration of the common timing advance drift rate. In this case, the SIB may carry information about the common timing advance, the common timing advance drift rate, and a validity duration.

In this application, the drift rate #1 may indicate a drift amount of the TA #1 in a time unit #A (namely, an example of the first time unit in the first aspect).

Optionally, the time unit #A is variable. To be specific, the satellite #A may determine the time unit #A and deliver information about a value of the time unit #A to the terminal device #A in this application.

In addition, by way of example but not a limitation, the information about the value of the time unit #A may be carried in the SIB, for example, the SIB 1. This information can be sent with the information about the validity duration at the same time or at different moments.

According to the solution provided in this application, for example, a validity duration of a common TA and a validity duration of a TA drift rate each are three SIB periods, a period of the SIB 1 is 160 ms, and another system message does not change. In this case, a user can adjust the common TA based on the TA drift rate and closed-loop indication in 480 ms without listening to broadcast signals.

In addition, in the conventional technology, if the system message changes, scrambled DCI is used to notify a user side. If only TA-related information in a system message changes, the user may periodically listen to a broadcast signal based on a period without an additional DCI indication. This reduces complexity on the user side.

A range of the common TA is related to a base station device type, selection of a reference point, and whether the common TA includes a feeder link. Alternatively, the common TA may be some discrete indication parameters. A timing advance corresponding to the common TA may include values such as {2 ms, 4 ms, 6 ms, 8 ms, 10 ms, 12 ms, ..., 40 ms, ..., 100 ms, ..., 500 ms}. This is not limited herein. It is assumed that a satellite orbit height is 600 km and a corresponding common TA is 4 ms.

Table 1 below shows an example of an SIB (for example, ServingCellConfigCommonSIB) in this application. In this example, a (satellite) common timing advance includes a distance-related common timing advance.

**Table 1**

| Field | Carried information |
|---|---|
| Common downlink configuration field (downlinkConfigCommon) | Common downlink configuration information (DownlinkConfigCommonSIB) |
| Common uplink configuration field (uplinkConfigCommon) | Common uplink configuration information (UplinkConfigCommonSIB) |

(continued)

| Field | Carried information |
|---|---|
| Supplementary uplink field (supplementary Uplink) | Common uplink configuration information (UplinkConfigCommonSIB) |
| Common timing advance indication field (n-TimingAdvanceOffset) | For example, {n0, n25600, n39936} |
| (Satellite) Common timing advance field (TimingAdvanceCommon) | For example, {A1, A2, A3, ...} |
| (Satellite) Common timing advance drift rate field (TimingAdvanceRateCommon) | For example, {B1, B2, B3, ...} |
| (Satellite) Validity duration field (TimingAdvanceRate ValidPeriod) | For example, {C1, C2, C3, ...} |
| ... | ... |

Table 2 below shows another example of an SIB (for example, ServingCellConfigCommonSIB) in this application. In this example, a (satellite) common timing advance includes a distance-related common timing advance and a common error-related common timing advance. A common error-related common timing advance field TimingAdvance-Common is an individual field.

**Table 2**

| Field | Carried information |
|---|---|
| DownlinkConfigCommon | DownlinkConfigCommonSIB |
| UplinkConfigCommon | UplinkConfigCommonSIB |
| SupplementaryUplink | UplinkConfigCommonSIB |
| n-TimingAdvanceOffset | For example, {n0, n25600, n39936} |
| TimingAdvanceCommon | For example, {A1, A2, A3, ...} |
| (Satellite) Common timing advance error field TimingAdvanceMargin | For example, {D1, D2, D3, ...} |
| TimingAdvanceRateCommon | For example, {B1, B2, B3, ...} |
| TimingAdvanceRateValidPeriod | For example, {C1, C2, C3, ...} |
| ... | ... |

Table 3 below shows another example of an SIB (for example, ServingCellConfigCommonSIB) in this application.

**Table 3**

| Field | Carried information |
|---|---|
| DownlinkConfigCommon | DownlinkConfigCommonSIB |
| UplinkConfigCommon | UplinkConfigCommonSIB |
| SupplementaryUplink | UplinkConfigCommonSIB |
| n-TimingAdvanceOffset | For example, {n0, n25600, n39936} |
| TimingAdvanceCommon | For example, {A1, A2, A3, ...} |
| TimingAdvanceRateCommon | For example, {B1, B2, B3, ...} |
| TimingAdvanceRateValidPeriod | For example, {C1, C2, C3, ...} |
| (Satellite) Common timing advance drift rate time unit field (TimingAdvanceRateTUnit) | For example, {E1, E2, E3, ...} |

(continued)

| Field | Carried information |
|---|---|
| ... | ... |

In this application, a TA indicated by information carried in n-TimingAdvanceOffset may be a sum of a TA (for example, a TA related to TDD and FDD) in a ground communication system and a TA (for example, the TA #1) in a satellite communication system. In this case, there is no need to indicate the TA#1.

Table 4 below shows an example of an SIB (for example, ServingCellConfigCommonSIB) in the case.

**Table 4**

| Field | Carried information |
|---|---|
| DownlinkConfigCommon | DownlinkConfigCommonSIB |
| UplinkConfigCommon | UplinkConfigCommonSIB |
| SupplementaryUplink | UplinkConfigCommonSIB |
| n-TimingAdvanceOffset | For example, {n0, n25600, n39936} |
| TimingAdvanceRateCommon | For example, {B1, B2, B3, ...} |
| TimingAdvanceRateValidPeriod | For example, {C1, C2, C3, ...} |
| ... | ... |

In this application, the n-TimingAdvanceOffset field is related to a frequency band. For example, FR 1 corresponds to 450 MHz to 6000 MHz, and FR 2 corresponds to 24250 MHz to 52600 MHz. If the field is set by default, the values in the table are used. If the field is not set by default, a parameter specified indicated in n-TimingAdvanceOffset is used. In this application, an agreed manner is used if the field is set by default. For example, TimingAdvanceOffset is queried in the table, and a common TA is 0. Alternatively, TimingAdvanceOffset is queried in the table, and a common TA uses a corresponding value based on a network device type. If the field is not set by default, for example, A = 50000, indicating that a timing advance of the sum of $N_{TA\_offset}$ and the common TA is 50000 Tc. A time unit is not limited in this application. Because a TA obtained after the sum of the two components is of a large magnitude, ms may be used as a unit. This is not limited herein.

In this application, a TA indicated by information carried in TimingAdvanceOffset may be a sum of a TA (for example, a TA related to TDD and FDD) in a ground communication system and a TA (for example, the TA #1) in a satellite communication system. In this case, the n-TimingAdvanceOffset field may not be required.

Table 5 below shows an example of an SIB (for example, ServingCellConfigCommonSIB) in the case.

**Table 5**

| Field | Carried information |
|---|---|
| DownlinkConfigCommon | DownlinkConfigCommonSIB |
| UplinkConfigCommon | UplinkConfigCommonSIB |
| SupplementaryUplink | UplinkConfigCommonSIB |
| TimingAdvanceOffset | For example, {A1, A2, A3, ...} |
| TimingAdvanceRateCommon | For example, {B1, B2, B3, ...} |
| TimingAdvanceRateValidPeriod | For example, {C1, C2, C3, ...} |
| ... | ... |

In satellite communication, a Doppler frequency offset occurs due to a large distance between a satellite and a terminal and satellite movement. The satellite may perform frequency offset pre-compensation in advance, to reduce an impact of the Doppler frequency offset. When a cell is switched, the frequency offset pre-compensation abruptly changes. As a result, frequency synchronization complexity of the terminal device increases. Therefore, the satellite may indicate a value of the frequency offset pre-compensation (or the frequency offset pre-compensation) to the terminal device in this application.

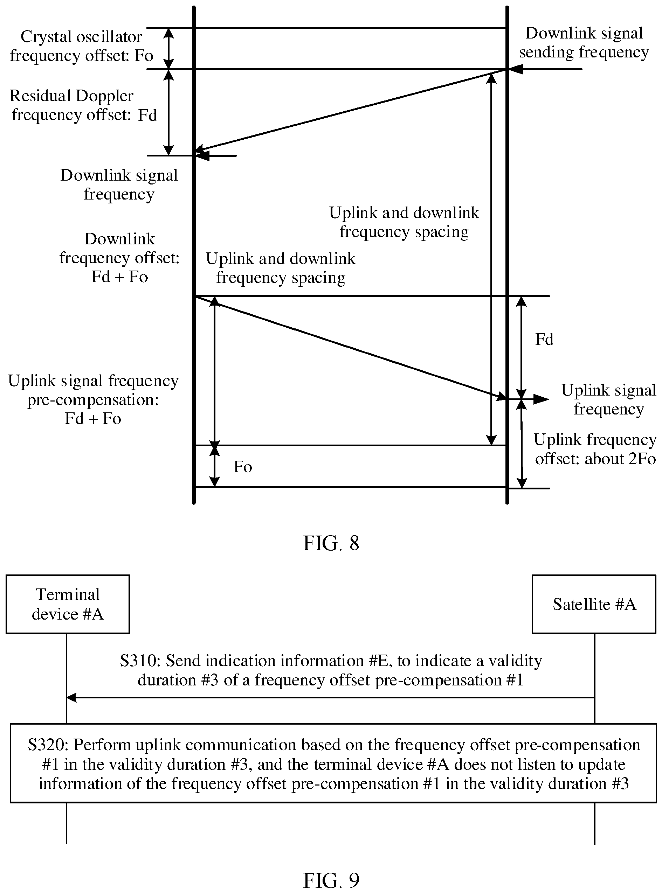

In addition, in a downlink frequency synchronization process, a base station side first performs pre-compensation of a frequency, to reduce a frequency of receiving a signal on a user side. A user detects a frequency offset based on a center frequency. The frequency offset includes a residual Doppler frequency offset Fd after compensation on the base station side and a frequency offset Fo caused by a crystal oscillator of the terminal. The user cannot distinguish the two components. If a frequency of Fd + Fo is directly used for pre-compensation when an uplink signal is sent, a frequency offset of about twice the crystal oscillator frequency offset is finally generated on a terminal side as shown in FIG. 8.

If the frequency offset caused by the crystal oscillator is large, the frequency offset generated on the base station side is also large. This increases signal processing complexity on the base station side. If the user knows the residual Doppler frequency offset Fd, the user may obtain the crystal oscillator frequency offset Fo based on the downlink frequency offset, and perform pre-compensation when the uplink signal is sent, to reduce a frequency offset on the base station side.

It is assumed that an original sending frequency of the signal is Fc, a last sending frequency of the signal is:

$$Fc - (Fd + Fo) + 2Fo = Fc - Fd + Fo$$

The user can obtain a total Doppler frequency offset FDoff based on a geographical location and ephemeris of the user. If the base station side broadcasts a Doppler pre-compensation value assumed as Foffset, the user can calculate Fd = FDoff - Foffset. Finally, the crystal oscillator frequency offset Fo is obtained.

FIG. 9 is a schematic flowchart of a satellite communication method 300 according to this application. The method 300 can effectively reduce energy consumption of a terminal device and increased communication complexity that are caused by listening to a frequency offset pre-compensation.

As shown in FIG. 9, S310: A satellite #A may send indication information #E (namely, still another example of the first indication information in the first aspect) to a terminal device #A.

A manner of sending the indication information #E is similar to that of sending the indication information #A. Detailed description is omitted herein to avoid repetition.

The indication information #E may refer to a validity duration (denoted as a validity duration #3) of a frequency offset pre-compensation #1 (namely, an example of the first frequency offset pre-compensation in the first aspect).

The frequency offset pre-compensation may also be referred to as a pre-compensation of a frequency offset (a frequency offset between a transmit power of a satellite and a receive power of a terminal device, or an offset between a receive power of a satellite and a transmit power of a terminal device).

The frequency offset pre-compensation #1 may be a common frequency offset pre-compensation used by the satellite #A. In this case, the indication information #E may be carried in a broadcast message or a multicast message.

Alternatively, the frequency offset pre-compensation #1 may be a dedicated frequency offset pre-compensation configured by the satellite #A for the terminal device #A.

In this case, for example, the indication information #E may be carried in a broadcast message or a multicast message. In addition, the indication information #E may include a dedicated identifier of the terminal device #A, for example, a device identifier of the terminal device #A or an identifier of the terminal device #A in a cell provided by the satellite #A. In this way, a terminal device in the cell can determine, based on the dedicated identifier of the terminal device #A, that the frequency offset pre-compensation #1 is the dedicated TA of the terminal device #A.

For another example, the indication information #E may be carried in a unicast message of the terminal device #A.

Content indicated by the indication information #E may be similar to that indicated by the indication information #A. For example, the indication information #E may indicate a quantity of time periods included in the validity duration #3.

In this application, a value of the validity duration #3 may be randomly determined based on an actual situation. This is not particularly limited in this application. For example, the satellite #A may determine the value of the validity duration #3 based on a moving speed of the satellite #A, a geographical location of a service area, and the like.

The following describes an indication manner of the indication information #E.

In this application, the indication information #E may explicitly indicate the validity duration #3 (that is, manner 3), or the indication information #E may implicitly indicate the validity duration #3 (that is, manner 4). The following separately describes the foregoing two manners in detail.

Manner 3

Specifically, the indication information #E may include an index or an identifier corresponding to the validity duration #3, or may include bits corresponding to a value (for example, the quantity of included time periods) of the validity duration #3.

By way of example but not a limitation, in this application, the indication information #E may be carried in a SIB, for example, a SIB 1.

In this application, the indication information #E may be sent with indication information (denoted as indication information #G) of the frequency offset pre-compensation #1 or indication information (denoted as indication information #H) of a drift rate of the frequency offset pre-compensation #1 at the same time. In other words, the indication information #E may be carried in a same message, for example, the SIB 1, with the indication information #G and/or the indication information #H.

In this application, a serving cell configuration common SIB (ServingCellConfigCommonSIB) field in the SIB 1 includes a common parameter of the cell. Therefore, in this application, fields related to satellite communication may be added to the ServingCellConfigCommonSIB field, that is, a common frequency offset pre-compensation (Frequency-Offset) field, a common frequency offset pre-compensation drift rate (FrequencyOffsetRate) field, and a frequency domain-related validity duration (FrequencyOffsetPeriod) field. The FrequencyOffset field may carry information about a common frequency offset pre-compensation (for example, the frequency offset pre-compensation #1). The FrequencyOffsetRate field may carry information about a drift rate of the common frequency offset pre-compensation (for example, a drift rate of the frequency offset pre-compensation #1) The FrequencyOffsetPeriod field may carry information about a validity duration (for example, the validity duration #1) of the common frequency offset pre-compensation.

Manner 4

Specifically, mapping relationship information (denoted as a mapping relationship #B) may be prestored in the terminal device #A, the mapping relationship #B may include a mapping relationship between a plurality of parameter groups and a plurality of durations.

The mapping relationship #B may be specified in a communication system or a communication protocol, or may be determined through negotiation by the satellite #A and the terminal device #A. This is not specifically limited in this application.

In this application, each parameter group may include one or more of the following parameters:

a frequency offset pre-compensation, a frequency offset pre-compensation index, a frequency offset pre-compensation calculation parameter (namely, a parameter used to calculate the frequency offset pre-compensation), a frequency offset pre-compensation drift rate (namely, an example of parameter information of the frequency offset pre-compensation), a frequency offset pre-compensation drift rate index, and a frequency offset pre-compensation drift rate calculation parameter (namely, a parameter used to calculate the frequency offset pre-compensation drift rate).

In this case, the indication information #E may indicate a parameter group #B (namely, an example of the first parameter group in the first aspect), and the validity duration #3 may be a duration indicated by the mapping relationship #B and corresponding to the parameter group #B.

In addition, the parameter group #B may be a parameter configured by the satellite #A for the terminal device #A and used for satellite communication. For example, when the parameter group includes a frequency offset pre-compensation, the frequency offset pre-compensation in the parameter group #B may be a common frequency offset pre-compensation actually used by the terminal device #A, namely, the frequency offset pre-compensation #1.

It should be noted that, in the manner 4, the parameter in the parameter group may be carried in the foregoing SIB, for example, the SIB 1. For example, the FrequencyOffset field may carry information about the frequency offset pre-compensation, the frequency offset pre-compensation index, and the frequency offset pre-compensation calculation parameter. The FrequencyOffsetRate field may carry information about the frequency offset pre-compensation drift rate, the frequency offset pre-compensation drift rate index, and the frequency offset pre-compensation drift rate calculation parameter.

S320: The terminal device #A performs uplink communication with the satellite #A in the validity duration #3 based on the frequency offset pre-compensation #1. In addition, in this application, the terminal device #A does not need to listen to, in the validity duration #3, information or a message sent by the satellite #A and used to update the frequency offset pre-compensation #1. It should be noted that, in this application, in the validity duration #3, the terminal device #A does not listen to the information or the message used to update the frequency offset pre-compensation # 1, but the satellite #A may still send the information or the message used to update the frequency offset pre-compensation #1.

Alternatively, in the validity duration #3, the satellite #A may no longer send the information or the message used to update the frequency offset pre-compensation #1.

It should be noted that the method 300 and the method 100 may be used separately or in combination. This is not particularly limited in this application. For example, a SIB may carry a common timing advance, a validity duration of the common timing advance, a frequency offset pre-compensation, and a validity duration of the frequency offset pre-compensation.

For another example, the validity duration of the common timing advance may be the same as the validity duration of the frequency offset pre-compensation. In this case, the SIB may carry information about the common timing advance, the frequency offset pre-compensation, and a validity duration.

For another example, the validity duration of the common timing advance may be different from the validity duration of the frequency offset pre-compensation. In this case, the SIB may carry the common timing advance, the validity duration of the common timing advance, the frequency offset pre-compensation, and the validity duration of the frequency offset pre-compensation.

Table 6 below shows an example of an SIB (for example, ServingCellConfigCommonSIB) that carries the validity duration of the frequency offset pre-compensation in this application.

**Table 6**

| ServingCellConfigCommonSIB | |
|---|---|
| DownlinkConfigCommon | DownlinkConfigCommonSIB |
| UplinkConfigCommon | UplinkConfigCommonSIB |
| SupplementaryUplink | UplinkConfigCommonSIB |
| n-TimingAdvanceOffset | For example, {n0, n25600, n39936} |
| TimingAdvanceCommon | For example, {A1, A2, A3, ...} |
| ... | |
| FrequencyOffset | For example, {F1, F2, F3, ...} |
| FrequencyOffsetPeriod | For example, {T1, T2, T3, ...} |
| ... | ... |

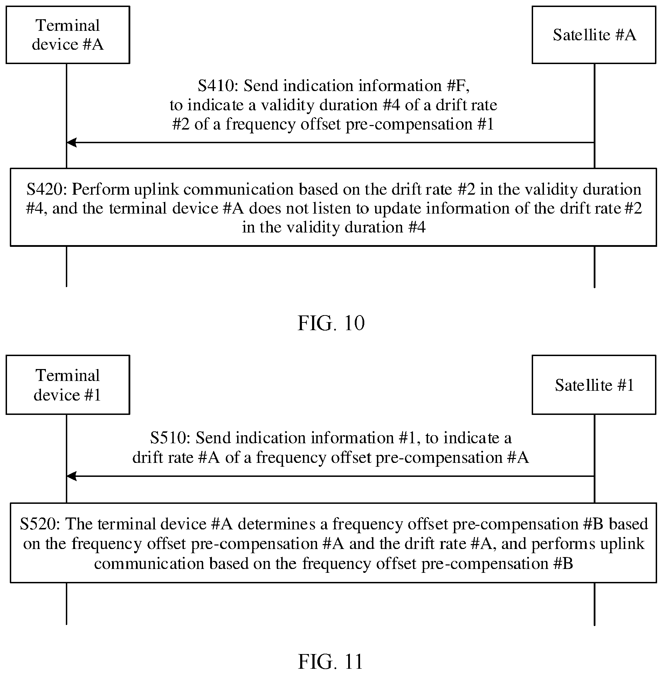

In addition, in this application, a manner of broadcasting parameter information of a frequency offset pre-compensation may be used. A user automatically performs a part of frequency offset pre-compensation tracking based on the broadcast parameter information of the frequency offset pre-compensation between two closed-loop frequency offset pre-compensation adjustments, to reduce a frequency offset pre-compensation adjustment error and closed-loop pressure. The following describes in detail a transmission process of the parameter information of the frequency offset pre-compensation with reference to FIG. 11.

In this application, the parameter information of the frequency offset pre-compensation may include parameter information used to determine a drift status of the frequency offset pre-compensation, such as a frequency offset pre-compensation drift rate or a satellite movement parameter. For ease of understanding and description, the following describes in detail the solutions of this application by using an example in which the frequency offset pre-compensation drift rate is the parameter information of the frequency offset pre-compensation.

In other words, if a pre-compensated frequency offset is not fixed, the frequency offset needs to change with time. To reduce a frequency of listening to a broadcast signal by the user, a corresponding field may be added to indicate a drift parameter of the frequency offset pre-compensation. For example, a frequency offset pre-compensation drift rate (FrequencyOffsetRate) field is added. The user may estimate a frequency offset drift compensated on the base station side based on a frequency offset compensation drift rate. For example, a frequency offset indicated by the Frequency-Offset field is 10 ppm, and the FrequencyOffsetRate indicates that a frequency offset compensation drift rate in a unit of time is 1 ppm. A frequency compensation value increases by 1 ppm for each time unit.

FIG. 10 is a schematic flowchart of a satellite communication method 400 according to this application. The method 400 can effectively reduce energy consumption of a terminal device and increased communication complexity that are caused by listening to a frequency offset pre-compensation drift rate.

As shown in FIG. 10, S410: A satellite #A may send indication information #F (namely, another example of the first indication information in the first aspect) to a terminal device #A.

A manner of sending the indication information #F is similar to that of sending the indication information #A. Detailed description is omitted herein to avoid repetition.

The indication information #F may indicate a validity duration (denoted as a validity duration #4) of a drift rate (denoted as a drift rate #2, namely, an example of the parameter information in the first aspect) of a frequency offset pre-compensation #1 (namely, an example of the first frequency offset pre-compensation in the first aspect).

The frequency offset pre-compensation #1 may be a common frequency offset pre-compensation #1 used by the satellite #A. In this case, the indication information #F may be carried in a broadcast message or a multicast message.

Alternatively, the frequency offset pre-compensation #1 may be a dedicated TA configured by the satellite #A for the terminal device #A.

In this case, for example, the indication information #F may be carried in a broadcast message or a multicast message. In addition, the indication information #F may include a dedicated identifier of the terminal device #A, for example, a device identifier of the terminal device #A or an identifier of the terminal device #A in a cell provided by the satellite #A. In this way, a terminal device in the cell can determine, based on the dedicated identifier of the terminal device #A, that the frequency offset pre-compensation #1 is the dedicated frequency offset pre-compensation of the terminal device #A.

For another example, the indication information #F may be carried in a unicast message of the terminal device #A.

Content indicated by the indication information #F may be similar to that indicated by the indication information #A. For example, the indication information #F may indicate a quantity of time periods included in the validity duration #4.

In this application, a value of the validity duration #4 may be randomly determined based on an actual situation. This is not particularly limited in this application. For example, the satellite #A may determine the value of the validity duration #4 based on a moving speed of the satellite #A, a geographical location of a service area, and the like.

An indication manner of the indication information #F may be similar to that of the indication information #E. To be specific, the indication information #F may explicitly indicate the validity duration #4, or the indication information #F may implicitly indicate the validity duration #4. Detailed description is omitted to avoid repetition.

S420: In the validity duration #4, the terminal device #A may determine a frequency offset pre-compensation #2 based on the drift rate #2 and the frequency offset pre-compensation #1, and perform uplink communication with the satellite #A based on the frequency offset pre-compensation #2. In addition, in this application, the terminal device #A does not need to listen to, in the validity duration #4, information or a message sent by the satellite #A and used to update the drift rate #2.

It should be noted that, in this application, in the validity duration #4, the terminal device #A does not listen to the information or the message used to update the drift rate #2, but the satellite #A may still send the information or the message used to update the drift rate #2.

Alternatively, in the validity duration #4, the satellite #A may no longer send the information or the message used to update the drift rate #2.

It should be noted that the method 300 and the method 400 may be used separately or in combination. This is not particularly limited in this application. For example, a SIB may carry information about a common frequency offset pre-compensation, a validity duration of the common frequency offset pre-compensation, a common frequency offset pre-compensation drift rate, and a validity duration of the common frequency offset pre-compensation drift rate.

For another example, the validity duration of the common frequency offset pre-compensation may be the same as the validity duration of the common frequency offset pre-compensation drift rate. In this case, the SIB may carry information about the common frequency offset pre-compensation, the common frequency offset pre-compensation drift rate, and a validity duration.

In this application, the drift rate #2 may indicate a drift amount of the frequency offset pre-compensation #1 in a time unit #B (namely, an example of the second time unit in the first aspect).

Optionally, the time unit #B is variable. To be specific, the satellite #A may determine the time unit #B and deliver information about a value of the time unit #B to the terminal device #A in this application.

In addition, by way of example but not a limitation, the information about the value of the time unit #B may be carried in the SIB, for example, a SIB 1. This information can be sent with the information about the validity duration at the same time or at different moments.

FIG. 11 is a schematic diagram of a method 500 for frequency offset pre-compensation drift rate transmission.

As shown in FIG. 11, in S510: A satellite #1 sends indication information (denoted as indication information #1, namely, an example of the first indication information in the fifth aspect) of a drift rate (denoted as a drift rate #A) of a frequency offset pre-compensation #A to a terminal device #1.

By way of example but not a limitation, the satellite #1 may directly send the indication information #1 to the terminal device #1.

Alternatively, the satellite #1 may send the indication information #1 to a satellite #2, and the satellite #2 sends the indication information #1 to the terminal device #1.

Alternatively, the satellite #1 may send the indication information #1 to another network device, for example, a ground base station, and the ground base station sends the indication information #1 to the terminal device #1.

Alternatively, the satellite #A may send the indication information #1 to another terminal device, for example, a terminal device #2, and the terminal device #2 sends the indication information #1 to the terminal device #1 (for example, by using a technology such as D2D communication).

The frequency offset pre-compensation #A may be a common frequency offset pre-compensation used by the satellite #1. In this case, the indication information #1 may be carried in a broadcast message or a multicast message.

Alternatively, the frequency offset pre-compensation #A may be a dedicated TA configured by the satellite #1 for the terminal device #1.

In this case, for example, the indication information #1 may be carried in a broadcast message or a multicast message. In addition, the indication information #1 may include a dedicated identifier of the terminal device #1, for example, a device identifier of the terminal device #1 or an identifier of the terminal device #1 in a cell provided by the satellite #1. In this way, a terminal device in the cell can determine, based on the dedicated identifier of the terminal device #1, that the frequency offset pre-compensation #A is the dedicated frequency offset pre-compensation of the terminal device #1.

For another example, the indication information #1 may be carried in a unicast message of the terminal device #1.

The following describes an indication manner of the indication information #1.

In this application, the indication information #1 may explicitly indicate the drift rate #A (that is, manner A), or the indication information #1 may implicitly indicate the drift rate #A (that is, manner B). The following separately describes the foregoing two manners in detail.

Manner A

Specifically, the indication information #1 may include an index or an identifier corresponding to the drift rate #A, or may include bits corresponding to a value of the drift rate #A.

By way of example but not a limitation, in this application, the indication information #1 may be carried in a SIB, for example, a SIB 1.

In this application, the indication information #1 may be sent with indication information (denoted as indication information #2) of the frequency offset pre-compensation #A at the same time. In other words, the indication information #1 and the indication information #2 may be carried in a same message, for example, the SIB 1.

For example, a frequency offset pre-compensation (FrequencyOffset) field may be added to the SIB to carry the indication information #2, and a frequency offset pre-compensation drift rate (FrequencyOffsetRate) field may be added to carry the indication information #1.

Table 7 below shows an example of the SIB in the manner A.

**Table 7**

| ServingCellConfigCommonSIB | |
|---|---|
| DownlinkConfigCommon | DownlinkConfigCommonSIB |
| UplinkConfigCommon | UplinkConfigCommonSIB |
| SupplementaryUplink | UplinkConfigCommonSIB |
| n-TimingAdvanceOffset | For example, {n0, n25600, n39936} |
| TimingAdvanceCommon | For example, {A1, A2, A3, ...} |
| ... | ... |
| FrequencyOffset | For example, {F1, F2, F3, ...} |
| FrequencyOffsetRate | For example, {R1, R2, R3, ...} |
| ... | ... |

Manner B

Specifically, mapping relationship information (denoted as a mapping relationship #1, namely, an example of the mapping relationship information in the fifth aspect) may be prestored in the terminal device #1, the mapping relationship #1 may include a mapping relationship between a plurality of parameter groups and a plurality of drift rates.

The mapping relationship #1 may be specified in a communication system or a communication protocol, or may be determined through negotiation by the satellite #1 and the terminal device #1. This is not specifically limited in this application.

In this application, each parameter group may include one or more of the following parameters:
a frequency offset pre-compensation, a frequency offset pre-compensation index, a frequency offset pre-compensation calculation parameter (namely, a parameter used to calculate the frequency offset pre-compensation), and a validity duration (namely, a validity duration of a frequency offset pre-compensation drift rate).

By way of example but not a limitation, one validity duration may include one or more specified time periods in this application. In this case, the indication information #A may indicate a quantity of time periods included in a validity duration #A.

The time period may be specified in a communication system or a communication protocol, or may be determined through negotiation by a network device (for example, a satellite, a ground base station, or a core network device) and a terminal device. This is not specifically limited in this application. For example, the time period may be a sending period of a system message (system information blocks, SIB) in a ground communication system.

In this case, the indication information #1 may indicate a parameter group #1 (namely, an example of the first parameter group in the fifth aspect), and the drift rate #A may be a drift rate indicated by the mapping relationship #1 and corresponding to the parameter group #1.

In addition, the parameter group #1 may be a parameter configured by the satellite #1 for the terminal device #1 and used for satellite communication. For example, when the parameter group includes a frequency offset pre-compensation, the frequency offset pre-compensation in the parameter group #1 may be a common frequency offset pre-compensation actually used by the terminal device #1, namely, the frequency offset pre-compensation #A.

For another example, when the parameter group #1 includes a validity duration (denoted as a validity duration #A), the validity duration #A may be a validity duration of the drift rate #A finally determined by the terminal device #1, or a validity duration of the frequency offset pre-compensation #A.

In addition, by way of example but not a limitation, for example, the indication information #1 may specifically indicate a start moment (or an end moment) and a length of the validity duration #A. For another example, the indication information #1 may indicate the start moment and the end moment of the validity duration #A. Alternatively, the indication information #1 may indicate only the length of the validity duration #A. In this case, the terminal device #1 and the satellite #1 may agree on the start moment or the end moment of the validity duration #A. For example, the start moment of the validity duration #A is a moment at which the terminal device #1 receives and obtains the indication information #1, or a start moment of a time period in which the terminal device #1 and obtains receives the indication information #1. Alternatively, the end moment of the validity duration #A is an end moment of the time period in which the terminal device #1 receives and obtains the indication information #1.

In this application, a value of the validity duration #A may be randomly determined based on an actual situation. This is not particularly limited in this application. For example, the satellite #1 may determine the value of the validity duration #A based on a moving speed of the satellite #1, a geographical location of a service area, and the like.

It should be noted that, in the manner B, the parameter in the parameter group may be carried in the foregoing SIB, for example, the SIB 1. For example, the FrequencyOffset field may carry information about the frequency offset pre-compensation, the frequency offset pre-compensation index, and the frequency offset pre-compensation calculation parameter. The FrequencyOffsetPeriod field may carry the validity duration of the frequency offset pre-compensation.

Table 8 below shows an example of the SIB in the manner B.

**Table 8**

| | |
|---|---|
| ServingCellConfigCommonSIB | |
| DownlinkConfigCommon | DownlinkConfigCommonSIB |
| UplinkConfigCommon | UplinkConfigCommonSIB |
| SupplementaryUplink | UplinkConfigCommonSIB |
| n-TimingAdvanceOffset | For example, {n0, n25600, n39936} |
| TimingAdvanceCommon | For example, {A1, A2, A3, ...} |
| ... | ... |
| FrequencyOffset | For example, {F1, F2, F3, ...} |
| TimingAdvanceRateValidPeriod | For example, {T1, T2, T3, ...} |
| ... | ... |

S520: The terminal device #1 may determine the drift rate #A based on the indication information #1, determine a frequency offset drift rate #B based on the frequency offset pre-compensation #A and the drift rate #A, and perform satellite communication based on a frequency offset pre-compensation #B. For example, a crystal oscillator frequency offset may be determined based on the frequency offset pre-compensation #B, and compensation for the crystal oscillator frequency offset is performed in uplink communication.

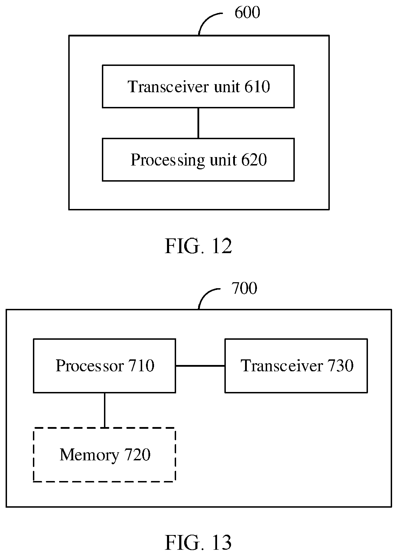

FIG. 12 is a schematic block diagram of a communication apparatus 600 according to an embodiment of this application. The apparatus 600 includes a transceiver unit 610 and a processing unit 620. The transceiver unit 610 may communicate with the outside, and the processing unit 620 is configured to process data. The transceiver unit 610 may also be referred to as a communication interface or a communication unit.

Optionally, the apparatus 600 may further include a storage unit. The storage unit may be configured to store instructions and/or data. The processing unit 620 may read the instructions and/or data in the storage unit.

The apparatus 600 may be configured to perform actions performed by the satellite in the method embodiments. In this case, the apparatus 600 may be a satellite or a component that may be configured on the satellite. The transceiver unit 610 is configured to perform operations related to receiving and sending on the satellite side in the method embodiments. The processing unit 620 is configured to perform operations related to processing on the satellite side in the method embodiments.

Alternatively, the apparatus 600 may be configured to perform actions performed by the terminal device in the method embodiments. In this case, the apparatus 600 may be a terminal device or a component that may be configured on the terminal device. The transceiver unit 610 is configured to perform operations related to receiving and sending on the terminal device side in the method embodiments. The processing unit 620 is configured to perform operations related to processing on the terminal device side in the method embodiments.

As shown in FIG. 13, an embodiment of this application further provides a communication apparatus 700. The communication apparatus 700 includes a processor 710. The processor 710 is coupled to a memory 720. The memory 720 is configured to store a computer program or instructions, and/or data. The processor 710 is configured to execute the computer program or instructions, and/or the data stored in the memory 720, to perform the method in the method embodiments.

Optionally, the communication apparatus 700 includes one or more processors 710.

Optionally, as shown in FIG. 13, the communication apparatus 700 may further include a memory 720.

Optionally, the communication apparatus 700 may include one or more memories 720.

Optionally, the memory 720 and the processor 710 may be integrated together, or disposed separately.

Optionally, as shown in FIG. 13, the wireless communication apparatus 700 may further include a transceiver 730, and the transceiver 730 is configured to receive and/or send a signal. For example, the processor 710 is configured to control the transceiver 730 to receive and/or send a signal.

In a solution, the communication apparatus 700 is configured to implement operations performed by the satellite in the method embodiments.

For example, the processor 710 is configured to implement operations related to processing and performed by the satellite in the method embodiments, and the transceiver 730 is configured to implement operations related to receiving and sending and performed by the satellite in the method embodiments.

In another solution, the communication apparatus 700 is configured to implement operations performed by the terminal device in the method embodiments.

For example, the processor 710 is configured to implement operations related to processing and performed by the terminal device in the method embodiments, and the transceiver 730 is configured to implement operations related to receiving and sending and performed by the terminal device in the method embodiments.

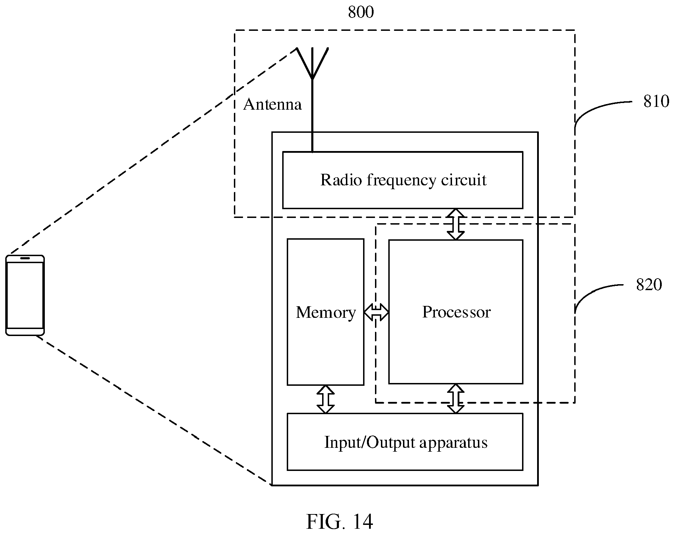

An embodiment of this application further provides a communication apparatus 800. The communication apparatus 800 may be a terminal device or a chip. The communication apparatus 800 may be configured to perform operations performed by the terminal device in the method embodiments. When the communication apparatus 800 is a terminal device, FIG. 14 is a schematic diagram of a simplified structure of the terminal device. For ease of understanding and illustration, an example in which the terminal device is a mobile phone is used in FIG. 14. As shown in FIG. 14, the terminal device includes a processor, a memory, a radio frequency circuit, an antenna, and an input/output apparatus. The processor is mainly configured to: process a communication protocol and communication data, control the terminal device, execute a software program, and process data of the software program. The memory is configured to store the software program and the data. The radio frequency circuit is mainly configured to: perform conversion between a baseband signal and a radio frequency signal, and process the radio frequency signal. The antenna is mainly configured to send and receive a radio frequency signal in an electromagnetic wave form. The input/output apparatus, such as a touchscreen, a display, or a keyboard, is mainly configured to receive data input by a user and output data to the user. It should be noted that some types of terminal devices may not have the input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends a radio frequency signal in an electromagnetic wave form by using the antenna. When data is sent to the terminal device, the radio frequency circuit receives a radio frequency signal by using the antenna, converts the radio frequency signal into a baseband signal, and outputs the baseband signal to the processor. The processor converts the baseband signal into data and processes the data. For ease of description, FIG. 14 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiment of this application.

In embodiments of this application, the antenna that has receiving and sending functions and the radio frequency circuit may be construed as a transceiver unit of the terminal device, and the processor having a processing function may be construed as a processing unit of the terminal device.

As shown in FIG. 14, the terminal device includes a transceiver unit 810 and a processing unit 820. The transceiver unit 810 may also be referred to as a transceiver, a transceiver machine, a transceiver apparatus, or the like. The processing unit 820 may also be referred to as a processor, a processing board, a processing module, a processing apparatus, or the like.

Optionally, a component that is in the transceiver unit 810 and that is configured to implement a receiving function may be construed as a receiving unit, and a component that is in the transceiver unit 810 and that is configured to implement a sending function may be construed as a sending unit. In other words, the transceiver unit 810 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

For example, in an implementation, the transceiver unit 810 is configured to perform a receiving operation of the terminal device. The processing unit 820 is configured to execute a processing action on the terminal device side.

It should be understood that FIG. 14 is merely an example instead of a limitation. A terminal device including the transceiver unit and the processing unit may not depend on the structure shown in FIG. 14.

When the communication apparatus 800 is a chip, the chip includes a transceiver unit and a processing unit. The transceiver unit may be an input/output circuit or a communication interface. The processing unit may be a processor, a microprocessor, or an integrated circuit integrated on the chip. The input circuit may be an input pin, the output circuit may be an output pin, and a processing circuit may be a transistor, a gate circuit, a trigger, various logic circuits, and the like. A signal input and received by the input circuit may be received and input by, for example, but not limited to, a receiver. A signal output by the output circuit may be, for example, but not limited to, output to a transmitter and transmitted by the transmitter. The input circuit and the output circuit may be different circuits, or may be a same circuit. In this case, the circuit is used as an input circuit and an output circuit at different times.

An embodiment of this application further provides a communication apparatus 900. The communication apparatus 900 may be a satellite or a chip. The communication apparatus 900 may be configured to perform operations performed by the satellite in the method embodiments.

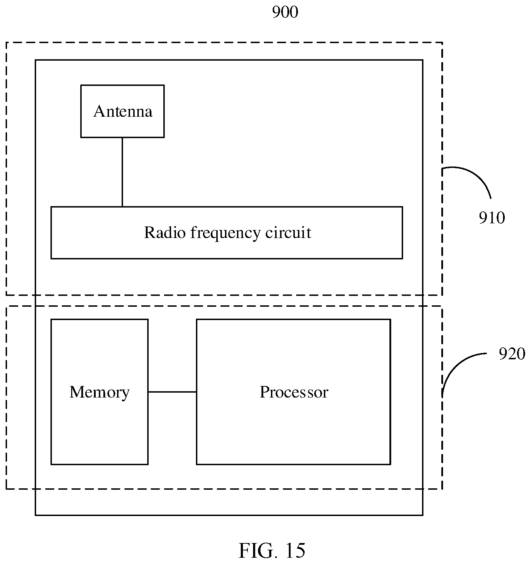

The communication apparatus 900 is a satellite, for example, a satellite base station. FIG. 15 is a schematic diagram of a simplified structure of a base station. The base station includes a part 910 and a part 920. The part 910 is mainly configured to: send and receive a radio frequency signal, and perform conversion between the radio frequency signal and a baseband signal. The part 920 is mainly configured to: perform baseband processing, control the base station, and the like. The part 910 may be usually referred to as a transceiver unit, a transceiver machine, a transceiver circuit, a transceiver, or the like. The part 920 is usually a control center of the base station, may usually be referred to as a processing unit, and is configured to control the base station to perform a processing operation on the network device side in the method embodiments.

The transceiver unit in the part 910 may also be referred to as a transceiver machine, a transceiver, or the like, and includes an antenna and a radio frequency circuit. The radio frequency circuit is mainly configured to perform radio frequency processing. Optionally, a component that is of the part 910 and that is configured to implement a receiving function may be construed as a receiving unit, and a component that is configured to implement a sending function may be construed as a sending unit. In other words, the part 910 includes the receiving unit and the sending unit. The receiving unit may also be referred to as a receiver machine, a receiver, a receiver circuit, or the like. The sending unit may also be referred to as a transmitter machine, a transmitter, a transmitter circuit, or the like.

The part 920 may include one or more boards, and each board may include one or more processors and one or more memories. The processor is configured to read and execute a program in the memory to implement a baseband processing function and control the base station. If there are a plurality of boards, the boards may be interconnected with each other to enhance a processing capability. In an optional implementation, the plurality of boards may share one or more processors, or the plurality of boards may share one or more memories, or the plurality of boards may simultaneously share one or more processors.

For example, in an implementation, the transceiver unit in the part 910 is configured to perform steps related to receiving and sending and performed by the satellite in embodiments. The part 920 is configured to perform steps related to processing and performed by the satellite.

It should be understood that FIG. 15 is merely an example instead of a limitation. A network device including the transceiver unit and the processing unit may not depend on the structure shown in FIG. 15.

When the communication apparatus 900 is a chip, the chip includes a transceiver unit and a processing unit. The transceiver unit may be an input/output circuit or a communication interface. The processing unit is a processor, a microprocessor, or an integrated circuit integrated on the chip. The input circuit may be an input pin, the output circuit may be an output pin, and a processing circuit may be a transistor, a gate circuit, a trigger, various logic circuits, and the like. A signal input and received by the input circuit may be received and input by, for example, but not limited to, a receiver. A signal output by the output circuit may be, for example, but not limited to, output to a transmitter and transmitted by the transmitter. The input circuit and the output circuit may be different circuits, or may be a same circuit. In this case, the circuit is used as an input circuit and an output circuit at different times.

An embodiment of this application further provides a computer-readable storage medium. The computer-readable storage medium stores computer instructions used to implement the method performed by the terminal device or the method performed by the satellite in the method embodiments.

For example, when the computer program is executed by a computer, the computer is enabled to implement the method performed by the terminal device or the method performed by the satellite in the method embodiments.

An embodiment of this application further provides a computer program product including instructions. When the instructions are executed by a computer, the computer is enabled to implement the method performed by the terminal device or the method performed by the network device in the method embodiments.

An embodiment of this application further provides a communication system. The communication system includes the satellite and the terminal device in the foregoing embodiments.

In an example, the communication system includes the satellite and the terminal device in the foregoing embodiments.

For explanations and beneficial effects of related content of any wireless communication apparatus provided above, refer to the corresponding method embodiment provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (which is also referred to as a main memory). An operating system of the operating system layer may be any one or more of computer operating systems implementing service processing by using a process (process), for example, a Linux operating system, a Unix operating system, an Android operating system, an iOS operating system, or a Windows operating system. The application layer may include applications such as a browser, an address book, word processing software, and instant communication software.

A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by a terminal device or a satellite, or by a functional module that is in the terminal device or the satellite and that can invoke a program and execute the program.

Aspects or features in embodiments of this application may be implemented as a method, an apparatus, or a product that uses standard programming and/or engineering technologies. The term "product" used in this specification may cover a computer program that can be accessed from any computer-readable component, carrier or medium. For example, a computer-readable medium may include but is not limited to: a magnetic storage device (for example, a hard disk, a floppy disk or a magnetic tape), an optical disc (for example, a compact disc (compact disc, CD) and a digital versatile disc (digital versatile disc, DVD)), a smart card, and a flash memory device (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel, and various other media that can store, contain, and/or carry instructions and/or data.

It should be understood that the processor mentioned in embodiments of this application may be a central processing unit (central processing unit, CPU), or may be another general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general purpose processor may be a microprocessor, or the processor may be any conventional processor or the like.

It should further be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA, or another programmable logic device, a discrete gate or a transistor logic device, or a discrete hardware component, the memory (storage module) may be integrated into the processor.

It should be further noted that the memory described in this specification is intended to include, but is not limited to, these memories and any other memory of a suitable type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a specific working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual coupling or direct coupling or communication connections may be implemented through some interfaces. The indirect coupling or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application. Therefore, the protection scope of this application shall be subject to the protection scope of the claims.

**Claims**

1. A satellite communication method, comprising:
   receiving, by a terminal device, first indication information, wherein the first indication information indicates a validity duration of first parameter information, and the first parameter information comprises at least one type of the following information:

   a first timing advance, parameter information of the first timing advance, a first frequency offset pre-compensation, or parameter information of the first frequency offset pre-compensation; and
   performing, by the terminal device, uplink communication with a satellite in the validity duration based on the first parameter information.

2. The method according to claim 1, wherein the method further comprises:
   determining the validity duration of the first parameter information based on the first indication information and mapping relationship information, wherein the mapping relationship information indicates a correspondence between a plurality of parameter groups and a plurality of durations, the first indication information indicates a first parameter group, and the validity duration is a duration corresponding to the first parameter group, wherein each parameter group comprises at least one of the following parameters:
a timing advance, a timing advance index, a timing advance calculation parameter, a timing advance drift rate, a timing advance drift rate index, a timing advance drift rate calculation parameter, a frequency offset pre-compensation, a frequency offset pre-compensation index, a frequency offset pre-compensation calculation parameter, a frequency offset pre-compensation drift rate, a frequency offset pre-compensation drift rate index, and a frequency offset pre-compensation drift rate calculation parameter.

3. The method according to claim 1 or 2, wherein the first indication information further comprises the first parameter information.

4. The method according to any one of claims 1 to 3, wherein the first indication information is carried in a common timing advance indication field in a system message.

5. The method according to claim 4, wherein a common timing advance parameter carried in the common timing advance indication field is determined based on the first timing advance.

6. The method according to any one of claims 1 to 5, wherein the parameter information of the first timing advance comprises a first drift rate, the first drift rate is a drift amount of the first timing advance in a first time unit, and a value of the first time unit is variable; or
the parameter information of the first frequency offset pre-compensation comprises a second drift rate, the second drift rate is a drift amount of the first frequency offset pre-compensation in a second time unit, and a value of the second time unit is variable.

7. The method according to claim 6, wherein the method further comprises:
receiving, by the terminal device, second indication information, wherein the second indication information comprises information about the value of the first time unit or information about the value of the second time unit.

8. The method according to claim 7, wherein the second indication information is carried in the common timing advance indication field in the system message.

9. A satellite communication method, comprising:
sending, by a satellite, first indication information, wherein the first indication information indicates a validity duration of first parameter information, and the first parameter information comprises at least one type of the following information:

a first timing advance, parameter information of the first timing advance, a first frequency offset pre-compensation, or parameter information of the first frequency offset pre-compensation; and
performing, by the satellite, uplink communication with a terminal device in the validity duration based on the first parameter information.

10. The method according to claim 9, wherein the first indication information indicates a first parameter group in a plurality of parameter groups, and the validity duration is a duration indicated by mapping relationship information and corresponding to the first parameter group, wherein the mapping relationship information indicates a correspondence between the plurality of parameter groups and a plurality of durations, and each parameter group comprises at least one of the following parameters:
a timing advance, a timing advance index, a timing advance calculation parameter, a timing advance drift rate, a timing advance drift rate index, a timing advance drift rate calculation parameter, a frequency offset pre-compensation, a frequency offset pre-compensation index, a frequency offset pre-compensation calculation parameter, a frequency offset pre-compensation drift rate, a frequency offset pre-compensation drift rate index, and a frequency offset pre-compensation drift rate calculation parameter.

11. The method according to claim 9 or 10, wherein the first indication information further comprises the first parameter information.

12. The method according to any one of claims 9 to 11, wherein the first indication information is carried in a common timing advance indication field in a system message.

13. The method according to claim 12, wherein a common timing advance parameter carried in the common timing advance indication field is determined based on the first timing advance.

14. The method according to any one of claims 9 to 13, wherein the parameter information of the first timing advance comprises a first drift rate, the first drift rate is a drift amount of the first timing advance in a first time unit, and a value of the first time unit is variable; or
the parameter information of the first frequency offset pre-compensation comprises a second drift rate, the second drift rate is a drift amount of the first frequency offset pre-compensation in a second time unit, and a value of the second time unit is variable.

15. The method according to claim 14, wherein the method further comprises:
sending, by the satellite, second indication information, wherein the second indication information comprises information about the value of the first time unit or information about the value of the second time unit.

16. The method according to claim 15, wherein the second indication information is carried in the common timing advance indication field in the system message.

17. A satellite communication apparatus, comprising:
a transceiver unit, configured to receive first indication information, wherein the first indication information indicates a validity duration of first parameter information, and the first parameter information comprises at least one type of the following information:

a first timing advance, parameter information of the first timing advance, a first frequency offset pre-compensation, or parameter information of the first frequency offset pre-compensation; and
a processing unit, configured to control the transceiver unit to perform uplink communication with a satellite in the validity duration based on the first parameter information.

18. The apparatus according to claim 17, wherein the processing unit is further configured to determine the validity duration of the first parameter information based on the first indication information and mapping relationship information, wherein the mapping relationship information indicates a correspondence between a plurality of parameter groups and a plurality of durations, the first indication information indicates a first parameter group, and the validity duration is a duration corresponding to the first parameter group, wherein each parameter group comprises at least one of the following parameters:
a timing advance, a timing advance index, a timing advance calculation parameter, a timing advance drift rate, a timing advance drift rate index, a timing advance drift rate calculation parameter, a frequency offset pre-compensation, a frequency offset pre-compensation index, a frequency offset pre-compensation calculation parameter, a frequency offset pre-compensation drift rate, a frequency offset pre-compensation drift rate index, and a frequency offset pre-compensation drift rate calculation parameter.

19. The apparatus according to claim 17 or 18, wherein the first indication information further comprises the first parameter information.

20. The apparatus according to any one of claims 17 to 19, wherein the first indication information is carried in a common timing advance indication field in a system message.

21. The apparatus according to claim 20, wherein a common timing advance parameter carried in the common timing advance indication field is determined based on the first timing advance.

22. The apparatus according to any one of claims 17 to 21, wherein the parameter information of the first timing advance comprises a first drift rate, the first drift rate is a drift amount of the first timing advance in a first time unit, and a value of the first time unit is variable; or
the parameter information of the first frequency offset pre-compensation comprises a second drift rate, the second drift rate is a drift amount of the first frequency offset pre-compensation in a second time unit, and a value of the second time unit is variable.

23. The apparatus according to claim 22, wherein the transceiver unit is further configured to receive second indication information, wherein the second indication information comprises information about the value of the first time unit or information about the value of the second time unit.

24. The apparatus according to claim 23, wherein the second indication information is carried in the common timing advance indication field in the system message.

25. A satellite communication apparatus, comprising:

a transceiver unit, configured to send first indication information, wherein the first indication information indicates a validity duration of first parameter information, and the first parameter information comprises at least one type of the following information:

a first timing advance, parameter information of the first timing advance, a first frequency offset pre-compensation, or parameter information of the first frequency offset pre-compensation; and

a processing unit, configured to control the transceiver unit to perform uplink communication with a terminal device in the validity duration based on the first parameter information.

26. The apparatus according to claim 25, wherein the first indication information indicates a first parameter group in a plurality of parameter groups, and the validity duration is a duration indicated by mapping relationship information and corresponding to the first parameter group, wherein the mapping relationship information indicates a correspondence between the plurality of parameter groups and a plurality of durations, and each parameter group comprises at least one of the following parameters:

a timing advance, a timing advance index, a timing advance calculation parameter, a timing advance drift rate, a timing advance drift rate index, a timing advance drift rate calculation parameter, a frequency offset pre-compensation, a frequency offset pre-compensation index, a frequency offset pre-compensation calculation parameter, a frequency offset pre-compensation drift rate, a frequency offset pre-compensation drift rate index, and a frequency offset pre-compensation drift rate calculation parameter.

27. The apparatus according to claim 25 or 26, wherein the first indication information further comprises the first parameter information.

28. The apparatus according to any one of claims 25 to 27, wherein the first indication information is carried in a common timing advance indication field in a system message.

29. The apparatus according to claim 28, wherein a common timing advance parameter carried in the common timing advance indication field is determined based on the first timing advance.

30. The apparatus according to any one of claims 25 to 29, wherein the parameter information of the first timing advance comprises a first drift rate, the first drift rate is a drift amount of the first timing advance in a first time unit, and a value of the first time unit is variable; or

the parameter information of the first frequency offset pre-compensation comprises a second drift rate, the second drift rate is a drift amount of the first frequency offset pre-compensation in a second time unit, and a value of the second time unit is variable.

31. The apparatus according to claim 30, wherein the transceiver unit is further configured to send second indication information, wherein the second indication information comprises information about the value of the first time unit or information about the value of the second time unit.

32. The apparatus according to claim 31, wherein the second indication information is carried in the common timing advance indication field in the system message.

33. A communication apparatus, comprising a processor, wherein the processor is coupled to a memory, the memory is configured to store a computer program or instructions, and the processor is configured to execute the computer program or instructions in the memory, to perform

the method according to any one of claims 1 to 8, or
the method according to any one of claims 9 to 16.

34. The apparatus according to claim 31, wherein the memory is integrated into the processor.

35. The apparatus according to claim 33 or 34, wherein the communication apparatus is a chip.

**36.** A computer-readable storage medium, storing a computer program or instructions, wherein the computer program or instructions is/are used to implement

the method according to any one of claims 1 to 8, or
the method according to any one of claims 9 to 16.

**37.** A chip system, comprising a communication interface and a processing circuit, wherein the communication interface is configured to obtain to-be-processed data, and the processing circuit is configured to process the to-be-processed data according to the method according to any one of claims 1 to 8.

**38.** A chip system, comprising a communication interface and a processing circuit, wherein the communication interface is configured to send indication information according to the method according to any one of claims 9 to 16, and the processing circuit is configured to generate the indication information.

FIG. 1

FIG. 2

$\Delta d = d2 - d1$

FIG. 3

FIG. 4

FIG. 5

```
┌──────────────┐                                    ┌──────────────┐
│  Terminal    │                                    │              │
│  device #A   │                                    │ Satellite #A │
└──────┬───────┘                                    └──────┬───────┘
       │                                                   │
       │      S110: Send indication information #A, to     │
       │        indicate a validity duration #1 of a TA #1 │
       │◄──────────────────────────────────────────────────│
       │                                                   │
┌──────┴───────────────────────────────────────────────────┴───────┐
│ S120: Perform uplink communication based on the TA #1 in the      │
│ validity duration #1, and the terminal device #A does not listen  │
│ to update information of the TA #1 in the validity duration #1    │
└──────┬───────────────────────────────────────────────────┬───────┘
       │                                                   │
       │                                                   │
```

FIG. 6

```
┌──────────────┐                                    ┌──────────────┐
│  Terminal    │                                    │              │
│  device #A   │                                    │ Satellite #A │
└──────┬───────┘                                    └──────┬───────┘
       │                                                   │
       │      S210: Send indication information #B, to     │
       │     indicate a validity duration #2 of a drift    │
       │         rate #1 of a TA #1                         │
       │◄──────────────────────────────────────────────────│
┌──────┴───────────────────────────────────────────────────┴───────┐
│ S220: Perform uplink communication based on the drift rate #1 in  │
│ the validity duration #2, and the terminal device #A does not     │
│ listen to update information of the drift rate #1 in the validity │
│ duration #2                                                       │
└──────┬───────────────────────────────────────────────────┬───────┘
       │                                                   │
       │                                                   │
```

FIG. 7

Crystal oscillator
frequency offset: Fo

Downlink signal
sending frequency

Residual Doppler
frequency offset: Fd

Downlink signal
frequency

Downlink
frequency offset:
Fd + Fo

Uplink and downlink
frequency spacing

Uplink and downlink
frequency spacing

Fd

Uplink signal frequency
pre-compensation:
Fd + Fo

Uplink signal
frequency

Uplink frequency
offset: about 2Fo

Fo

FIG. 8

Terminal
device #A

Satellite #A

S310: Send indication information #E, to indicate a validity
duration #3 of a frequency offset pre-compensation #1

S320: Perform uplink communication based on the frequency offset pre-compensation
#1 in the validity duration #3, and the terminal device #A does not listen to update
information of the frequency offset pre-compensation #1 in the validity duration #3

FIG. 9

```
┌──────────────┐                                              ┌──────────────┐
│  Terminal    │                                              │ Satellite #A │
│  device #A   │                                              │              │
└──────┬───────┘                                              └──────┬───────┘
       │         S410: Send indication information #F,               │
       │      to indicate a validity duration #4 of a drift rate     │
       │       #2 of a frequency offset pre-compensation #1          │
       │◄────────────────────────────────────────────────────────────│
       │                                                             │
┌──────┴──────────────────────────────────────────────────────────────────────┐
│ S420: Perform uplink communication based on the drift rate #2 in the validity │
│ duration #4, and the terminal device #A does not listen to update information │
│ of the drift rate #2 in the validity duration #4                              │
└──────┬──────────────────────────────────────────────────────────────────┬────┘
       │                                                             │
```

FIG. 10

```
┌──────────────┐                                              ┌──────────────┐
│  Terminal    │                                              │ Satellite #1 │
│  device #1   │                                              │              │
└──────┬───────┘                                              └──────┬───────┘
       │         S510: Send indication information #1, to indicate a │
       │      drift rate #A of a frequency offset pre-compensation #A│
       │◄────────────────────────────────────────────────────────────│
       │                                                             │
┌──────┴──────────────────────────────────────────────────────────────────────┐
│ S520: The terminal device #A determines a frequency offset pre-compensation #B│
│ based on the frequency offset pre-compensation #A and the drift rate #A, and  │
│ performs uplink communication based on the frequency offset pre-compensation #B│
└──────┬──────────────────────────────────────────────────────────────────┬────┘
       │                                                             │
```

FIG. 11

600

┌─────────────────────────────────┐
│   ┌─────────────────────────┐   │
│   │   Transceiver unit 610  │   │
│   └─────────────────────────┘   │
│                │                │
│   ┌─────────────────────────┐   │
│   │   Processing unit 620   │   │
│   └─────────────────────────┘   │
└─────────────────────────────────┘

FIG. 12

700

┌───────────────────────────────────────────┐
│  ┌──────────────────┐   ┌───────────────┐  │
│  │  Processor 710   │───│ Transceiver 730│  │
│  └──────────────────┘   └───────────────┘  │
│           │                                 │
│  ┌ ─ ─ ─ ─ ─ ─ ─ ─ ┐                        │
│  │   Memory 720     │                       │
│  └ ─ ─ ─ ─ ─ ─ ─ ─ ┘                        │
└───────────────────────────────────────────┘

FIG. 13

800

Antenna

Radio frequency circuit

810

Memory

Processor

820

Input/Output apparatus

FIG. 14

900

Antenna

Radio frequency circuit

910

Memory

Processor

920

FIG. 15

## INTERNATIONAL SEARCH REPORT

| International application No. |
|---|
| **PCT/CN2021/075374** |

**A. CLASSIFICATION OF SUBJECT MATTER**

H04B 7/185(2006.01)i

According to International Patent Classification (IPC) or to both national classification and IPC

**B. FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 通信, 卫星, 终端, 手机, 客户, 用户, 开销, 节约, 消耗, 节省, 功耗, 定时, 生效, 有效, 时效, 时间, 周期, 工作, 计时, 时隙, 获取, 修正, 补偿, 指示, 提前, 参数, 传送, 发射, 传输, 频偏, 时段, 接收, 发送, 携带, 偏移, 帧, satellite, expenses, time, receive, power, Timing Advance, transmit, UE, period, acquire, frequence, indicate, valid, effective, slot, offset, TA, duration

**C. DOCUMENTS CONSIDERED TO BE RELEVANT**

| Category* | Citation of document, with indication, where appropriate, of the relevant passages | Relevant to claim No. |
|---|---|---|
| X | WO 2020029919 A1 (HUAWEI TECH CO., LTD.) 13 February 2020 (2020-02-13) description, page 1 paragraph 3, description page 8 paragraph 12 - page 28 paragraph 3, figures 1-9 | 1-38 |
| X | CN 107889261 A (HUAWEI TECHNOLOGIES CO., LTD.) 06 April 2018 (2018-04-06) description, paragraphs [0102]-[0304], and figures 1-9 | 1-38 |
| A | CN 101465686 A (ZTE CORPORATION) 24 June 2009 (2009-06-24) entire document | 1-38 |
| A | CN 102572937 A (POTEVIO INSTITUTE OF TECHNOLOGY CO., LTD.) 11 July 2012 (2012-07-11) entire document | 1-38 |
| A | CN 104753833 A (POTEVIO INSTITUTE OF TECHNOLOGY CO., LTD.) 01 July 2015 (2015-07-01) entire document | 1-38 |
| A | US 2008268850 A1 (MOTOROLA, INC.) 30 October 2008 (2008-10-30) entire document | 1-38 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 April 2021** | **26 April 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/075374** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2010220713 A1 (TYNDERFELDT TOBIAS et al.) 02 September 2010 (2010-09-02) entire document | 1-38 |
| A | WO 2013168938 A1 (LG ELECTRONICS INC.) 14 November 2013 (2013-11-14) entire document | 1-38 |

Form PCT/ISA/210 (second sheet) (January 2015)

**INTERNATIONAL SEARCH REPORT**
**Information on patent family members**

International application No.

**PCT/CN2021/075374**

| Patent document cited in search report | | | Publication date (day/month/year) | Patent family member(s) | | | Publication date (day/month/year) |
|---|---|---|---|---|---|---|---|
| WO | 2020029919 | A1 | 13 February 2020 | CN | 110831145 | A | 21 February 2020 |
| CN | 107889261 | A | 06 April 2018 | WO | 2018059307 | A1 | 05 April 2018 |
| | | | | EP | 3512288 | A4 | 28 August 2019 |
| | | | | EP | 3512288 | A1 | 17 July 2019 |
| | | | | US | 2019222411 | A1 | 18 July 2019 |
| | | | | IN | 201937012872 | A | 05 July 2019 |
| | | | | VN | 64128 | A | 25 June 2019 |
| CN | 101465686 | A | 24 June 2009 | CN | 101465686 | B | 05 December 2012 |
| CN | 102572937 | A | 11 July 2012 | CN | 102572937 | B | 14 January 2015 |
| CN | 104753833 | A | 01 July 2015 | CN | 104753833 | B | 27 February 2018 |
| US | 2008268850 | A1 | 30 October 2008 | WO | 2008137329 | A2 | 13 November 2008 |
| | | | | WO | 2008137329 | A3 | 29 January 2009 |
| US | 2010220713 | A1 | 02 September 2010 | US | 8411664 | B2 | 02 April 2013 |
| | | | | WO | 2009061255 | A1 | 14 May 2009 |
| | | | | EP | 2208290 | A4 | 04 December 2013 |
| | | | | JP | 5091328 | B2 | 05 December 2012 |
| | | | | JP | 2011503959 | A | 27 January 2011 |
| | | | | EP | 2208290 | A1 | 21 July 2010 |
| WO | 2013168938 | A1 | 14 November 2013 | US | 9578629 | B2 | 21 February 2017 |
| | | | | US | 2015098400 | A1 | 09 April 2015 |
| | | | | US | 2015049753 | A1 | 19 February 2015 |
| | | | | US | 9357536 | B2 | 31 May 2016 |
| | | | | WO | 2013169057 | A1 | 14 November 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010093138